(19) Europäisches Patentamt / European Patent Office / Office européen des brevets

(11) **EP 1 855 947 B1**

(12) **EUROPÄISCHE PATENTSCHRIFT**

(45) Veröffentlichungstag und Bekanntmachung des Hinweises auf die Patenterteilung:
**22.05.2013 Patentblatt 2013/21**

(21) Anmeldenummer: **06707350.2**

(22) Anmeldetag: **01.03.2006**

(51) Int Cl.:
**B65B 47/02** (2006.01)       **B65B 9/04** (2006.01)
**B29C 51/42** (2006.01)       **B32B 27/32** (2006.01)
**B65D 65/40** (2006.01)

(86) Internationale Anmeldenummer:
**PCT/EP2006/001870**

(87) Internationale Veröffentlichungsnummer:
**WO 2006/092290 (08.09.2006 Gazette 2006/36)**

(54) **THERMOFORMBARES VERPACKUNGSMATERIAL MIT SCHRUMPFEIGENSCHAFTEN**

THERMOFORMABLE PACKAGING MATERIAL EXHIBITING SHRINKING PROPERTIES

MATERIAU D'EMBALLAGE THERMOFORMABLE PRESENTANT DES PROPRIETES DE RETRECISSEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.03.2005 DE 102005009870**
**01.03.2005 DE 102005009868**
**18.04.2005 DE 102005017937**

(43) Veröffentlichungstag der Anmeldung:
**21.11.2007 Patentblatt 2007/47**

(73) Patentinhaber: **Schur Flexibles Dixie GmbH**
**87437 Kempten (DE)**

(72) Erfinder:
• **BERNIG, Walter**
**87471 Durach (DE)**
• **SEELBACH, Ralph**
**87437 Kempten (DE)**
• **DUJARDIN, Bernard**
**B-1180 Brüssel (BE)**

(74) Vertreter: **Kutzenberger, Helga et al**
**Kutzenberger Wolff & Partner**
**Theodor-Heuss-Ring 23**
**50668 Köln (DE)**

(56) Entgegenhaltungen:
**GB-A- 2 137 931**

• **PATENT ABSTRACTS OF JAPAN Bd. 1995, Nr. 07, 31. August 1995 (1995-08-31) & JP 07 096582 A (MITSUBISHI PLASTICS IND LTD), 11. April 1995 (1995-04-11)**
• **KREHALON: "KREHALON FS50 en FS90" INTERNET ARTIKEL, [Online] 12. Februar 2005 (2005-02-12), XP002390007 Gefunden im Internet: URL:http://web.archive.org/web/20050212121 640/www.krehalon.fr/benelux/nl/Page_Appel. htm> [gefunden am 2006-07-12] -& KREHALON: "FORM SHRINK FS50 and FS90 - Advantages of KREHALON FS50 and FS90 films when used in the Form Shrink System" INTERNET ARTIKEL, [Online] XP002390866 Gefunden im Internet: URL:http://www.krehalon.nl/producten/produ ct.php?id=34>**

EP 1 855 947 B1

**Beschreibung**

Die Erfindung betrifft Mehrschichtfolien, welche thermoformbar und gleichzeitig wärmeschrumpffähig sind, wobei die Wärmeschrumpffähigkeit durch die Thermoformung praktisch nicht beeinflusst wird, sowie zumindest daraus hergestellte Verpackungsmulden und entsprechende Verpackungen hergestellt auf einer adaptierten Verpackungsmaschine.

Lebensmittel werden heutzutage immer öfter in Kunststoffverpackungen angeboten, die eine Verpackungsmulde, in welche die Lebensmittel eingelegt werden, und eine Deckelfolie, mit welcher die Verpackungsmulde versiegelt wird, umfassen.

Die Verpackungsmulden werden üblicherweise durch Thermoformen, meist durch Tiefziehen, aus einer thermoformbaren Mehrschichtfolie unter Wärmeeinwirkung hergestellt. Nach Einbringen des Verpackungsguts erfolgt auch das Versiegeln der Verpackungsmulde mit der Deckelfolie unter Wärmeeinwirkung, d.h. durch Heißsiegelung.

Es sind Verpackungen dieses Typs bekannt, bei denen die Deckelfolie eine wärmeschrumpffähige Mehrschichtfolie ist.

Wärmeschrumpffähige Mehrschichtfolien sind üblicherweise biaxial orientiert und werden bei der Verpackung von Lebensmitteln, insbesondere von verderblichen Lebensmitteln wie Geflügel oder Frischfleisch verwendet, wobei diese Mehrschichtfolien vorzugsweise eine gas- und/oder aromadichte Barriereschicht aufweisen. Wärmeschrumpffähige Mehrschichtfolien haben die Eigenschaft, zu ihrem ursprünglichen, nicht orientierten Abmessungen zurückzuschrumpfen, wenn sie bis zu ihrem Erweichungspunkt erwärmt werden. Biaxial orientierte Mehrschichtfolien sind sowohl in Längs- als auch in Querrichtung gemäß ihrem Herstellungsprozess gereckt und weisen häufig eine Wärmeschrumpffähigkeit (Schrumpfungsvermögen) von 35% sowohl in Längs- als auch in Querrichtung auf.

Es besteht ein Bedarf an Verpackungen, bei denen die Folienbahn, aus welcher die Verpackungsmulde hergestellt wird, eine wärmeschrumpffähige Mehrschichtfolie ist. Dies ist jedoch schwierig zu realisieren. So steht bei herkömmlichen Verpackungsmaterialien üblicherweise die zur Ausbildung der Verpackungsmulde erforderliche Thermoformbarkeit des Materials einer gleichzeitigen Wärmeschrumpffähigkeit entgegen. Einerseits führt die Thermoformung herkömmlicher wärmeschrumpffähiger Mehrschichtfolien häufig zur Delaminierung. Andererseits führt die Thermoformung herkömmlicher thermoformbarer Mehrschichtfolien zu Verpackungsmulden, welche in den thermogeformten Bereichen üblicherweise keine oder eine nur gering ausgeprägte Wärmeschrumpffähigkeit aufweisen.

Verpackungsmaterialien, welche thermoformbar (vorzugsweise tiefziehfähig) und gleichzeitig wärmeschrumpffähig sind, haben besondere Vorteile. Mit solchen Verpackungsmaterialien können die Verpackungsgüter eng umschlossen werden, insbesondere wenn sowohl die Verpackungsmulde als auch die Deckelfolie aus einem wärmeschrumpffähigen Material gebildet ist. An derartige Verpackungsmaterialien werden besondere Anforderungen hinsichtlich ihrer thermischen und mechanischen Eigenschaften gestellt. So sollte der Schrumpfprozess möglichst erst eingeleitet werden können, nachdem die Ausbildung der Verpackungsmulde durch Thermoformen und die Versiegelung mit der Deckelfolie erfolgt ist, da auf diese Weise ein kontrolliertes zumindest teilweises Umschließen des Verpackungsgutes erreicht werden kann. Demnach sollte einerseits eine Thermoformung zur Verpackungsmulde erfolgen können, ohne dass mit der damit einhergehenden Wärmeeinwirkung der Schrumpfprozess eingeleitet wird. Andererseits sollte auch eine Versiegelung, d.h. ein thermisches Verschweißen der Verpackungsmulde mit der Deckelfolie erfolgen können, ohne dass mit der damit einhergehenden Wärmeeinwirkung der Schrumpfprozess eingeleitet wird.

JP 07 96582 offenbart eine tiefziehfähige, wärmeschrumpffähige Mehrschicht-Verpackungsfolie.

Der Erfindung liegt die Aufgabe zugrunde, ein Verpackungsmaterial bereitzustellen, welches Vorteile gegenüber den Verpackungsmaterialien des Standes der Technik aufweist. Insbesondere sollte das Verpackungsmaterial zu einer Verpackungsmulde thermogeformt, vorzugsweise tiefgezogen, und im Anschluss an das Einbringen des Verpackungsgutes mit der Deckelfolie versiegelt werden können, ohne dass bis zu diesem Zeitpunkt eine signifikante Schrumpfung des Verpackungsmaterials erfolgt ist. Erst dann sollte der Schrumpfprozess durch übliche Maßnahmen wie durch Wärmeeinwirkung eingeleitet werden können, wodurch sich die verschlossene Verpackung zumindest teilweise eng an das Verpackungsgut anlegt. Dabei sollte nach der Thermoformung und der Heißsiegelung einerseits eine ausreichende Verbundhaftung gewährleistet werden und andererseits auch noch eine ausreichende Wärmeschrumpffähigkeit vorhanden sein.

Diese Aufgabe kann gelöst werden durch eine thermoformbare, tiefziehfähige Mehrschichtfolie gemäß Anspruch 1 mit einer Wärmeschrumpffähigkeit in Längs- und in Querrichtung von jeweils wenigstens 20%, wobei die Wärmeschrumpffähigkeit durch Thermoformung im wesentlichen nicht beeinflusst wird. Bevorzugt beträgt die Wärmeschrumpffähigkeit der erfindungsgemäßen Mehrschichtfolien in Längs- und in Querrichtung jeweils wenigstens 25%, bevorzugter wenigstens 30%, noch bevorzugter wenigstens 35%, am bevorzugtesten wenigstens 40% und insbesondere wenigstens 45%.

Es wurde überraschend gefunden, dass Mehrschichtfolien hergestellt werden können, welche einerseits thermoformbar sind und auch noch nach der Thermoformung eine ausreichende Verbundhaftung aufweisen, und welche andererseits wärmeschrumpffähig sind, wobei die Wärmeeinwirkung im Zuge der Thermoformung mit geeigneten Vorrichtungen praktisch keinen Einfluss auf diese Eigenschaft hat.

"Im Wesentlichen nicht beeinflusst" bzw. "praktisch keinen Einfluss" im Sinne der Beschreibung bedeutet bevorzugt, dass die Wärmeschrumpffähigkeit der erfindungsgemäßen Mehrschichtfolie vor der Thermoformung und die Wärmeschrumpffähigkeit der erfindungsgemäßen Mehrschichtfolie nach der Thermoformung nur geringfügig oder praktisch unverändert sind. Sollte mit der Thermoformung eine Verringerung der Wärmeschrumpffähigkeit einhergehen, so beträgt diese vorzugsweise weniger als 10%, bevorzugter weniger als 7,5% und insbesondere weniger als 5%, bezogen auf die ursprüngliche Wärmeschrumpffähigkeit der Mehrschichtfolie.

Bevorzugt ist die erfindungsgemäße Mehrschichtfolie heißsiegelbar, wobei vorzugsweise die Wärmeschrumpffähigkeit der Mehrschichtfolie auch durch Heißsiegelung im wesentlichen nicht beeinflusst wird.

Die Erfindung betrifft eine thermoformbare, vorzugsweise tiefziehfähige, wärmeschrumpffähige Mehrschichtfolie, umfassend folgende Schichten:

- eine Trägerschicht (T) basierend auf zumindest einem thermoplastischen Polymer;

- eine Haftvermittlerschicht ($H_1$) basierend auf zumindest einem Polymer mit einer Schmelzflussindex MFI im Bereich von 0,1 bis 2,0 g/10 min, bestimmt nach DIN ISO 1133 bei 190°C und 2,16 kg, deren Schichtdicke jeweils größer ist als die Schichtdicke beider unmittelbar an die Haftvermittlerschicht ($H_1$) angrenzenden Schichten;

- ggf. eine sauerstoffdichte Barriereschicht (B);

- ggf. eine Haftvermittlerschicht ($H_2$) basierend auf zumindest einem Polymer mit einer Schmelzflussindex MFI im Bereich von 0,1 bis 2,0 g/10 min, bestimmt nach DIN ISO 1133 bei 190°C und 2,16 kg, wobei ihre Schichtdicke größer ist als die Schichtdicke zumindest einer der unmittelbar an die Haftvermittlerschicht ($H_2$) angrenzenden Schichten; und

- eine Siegelschicht (S), welche eine der beiden Oberfächenschichten der Mehrschichtfolie bildet und auf zumindest einem thermoplastischen Polymer basiert.

Die Abfolge der einzelnen Schichten innerhalb der Mehrschichtfolie entspricht bevorzugt der Reihenfolge ihrer Nennung in der vorstehenden Liste, d.h. (T)//($H_1$)//(B)//($H_2$)//(S). Dabei markiert "//" die Grenzfläche zweier benachbarter Schichten. Es ist nicht zwingend erforderlich, dass zwei durch "//" getrennte Schichten unmittelbar aufeinanderfolgen, d.h. einander berühren - es ist auch möglich, dass weitere Schichten eingeschoben sind. Mehrschichtfolien der Schichtabfolgen (T)//($H_1$)//(S) und (T)//($H_1$)//(B)//($H_2$)//(S) sind erfindungsgemäß besonders bevorzugt.

Bevorzugt liegt der Schmelzflussindex MFI der Haftvermittlerschicht ($H_1$) und der ggf. vorhandenen Haftvermittlerschicht ($H_2$) gleich oder verschieden im Bereich von 0,2 bis 1,9 g/10 min, bevorzugter 0,3 bis 1,8 g/10 min, noch bevorzugter 0,4 bis 1,7 g/10 min, am bevorzugtesten 0,5 bis 1,6 g/10 min und insbesondere 0,6 bis 1,5 g/10 min, bestimmt nach DIN ISO 1133 bei 190°C und 2,16 kg.

Grundsätzlich kommen verschiedene Polymere, Copolymerisate oder deren Mischungen für die Haftvermittlerschichten ($H_1$) und ggf. ($H_2$) in Betracht. Bevorzugt basieren die Haftvermittlerschicht ($H_1$) und die ggf. vorhandene Haftvermittlerschicht ($H_2$) gleich oder verschieden auf einem Ethylen-Vinylacetat-Copolymerisat. Besonders bevorzugt handelt es sich dabei gleich oder verschieden um ein Ethylen-Vinylacetat-Copolymerisat mit einem Vinylacetatgehalt im Bereich von 3 bis 18 mol.-%, bevorzugter 5 bis 17 mol.-%, am bevorzugtesten 10 bis 16 mol.-%, bestimmt nach ASTM E-168. Es ist möglich, dass das Ethylen-Vinylacetat-Copolymerisat weiter modifiziert ist. In diesem Zusammenhang sind zu nennen Acrylsäure-/Acrylatmodifiziertes Ethylen-Vinylacetat-Copolymerisat, Anhydrid-modifiziertes Ethylen-Vinylacetat-Copolymerisat oder ein Polymerblend enthaltend mindestens eines der vorstehend genannten Polymere.

In einer bevorzugten Ausführungsform ist nicht nur die Schichtdicke der Haftvermittlerschicht ($H_1$) jeweils größer als die Schichtdicke beider unmittelbar an die Haftvermittlerschicht ($H_1$) angrenzenden Schichten, sondern auch die Schichtdicke der ggf. vorhandenen Haftvermittlerschicht ($H_2$) jeweils größer als die Schichtdicke beider unmittelbar an die Haftvermittlerschicht ($H_2$) angrenzenden Schichten. Es wurde überraschend gefunden, dass durch geeignete Wahl der Schichtdicke der Haftvermittlerschicht ($H_1$) und der ggf. vorhandenen Haftvermittlerschicht ($H_2$) die Delaminierung der durch die Haftvermittlerschichten jeweils verbundenen Schichten im Zuge der Thermoformung vermieden werden kann.

Besonders bevorzugt weisen die Haftvermittlerschicht ($H_1$) und die ggf. vorhandene Haftvermittlerschicht ($H_2$) gleich oder verschieden eine Schichtdicke von wenigstens 20 $\mu$m, bevorzugter wenigstens 25 $\mu$m, noch bevorzugter wenigstens 30 $\mu$m, am bevorzugtesten wenigstens 35 $\mu$m und insbesondere wenigstens 40 $\mu$m auf.

In einer bevorzugten Ausführungsform der erfindungsgemäßen Mehrschichtfolie bildet die Trägerschicht (T) eine der beiden Oberflächenschichten der Mehrschichtfolie.

Bevorzugt basiert die Trägerschicht (T) der erfindungsgemäßen Mehrschichtfolie auf zumindest einem Polyolefin, Olefin-Copolymerisat, Polyester oder deren Mischung. Bevorzugt handelt es sich dabei um zumindest ein Polymer ausgewählt aus der Gruppe bestehend aus Polyethylen, Ethylen-Copolymerisat, Polypropylen und Propylen-Copolymerisat. Bevorzugte Polyolefine sind Polyethylen, insbesondere Polyethylen mit einer Dichte von höchstens 0,92 g/cm$^3$, Polypropylen (PP), Ethylen-Copolymerisat, insbesondere Ethylen-Vinylacetat-Copolymerisat und/oder Propylen-Copolymerisat. Besonders bevorzugt basiert die Trägerschicht (T) auf Polypropylen, einem Propylen-Copolymerisat (insbesondere einem Propylen-Random-Copolymerisat oder einem Propylen-Block-Copolymerisat) oder deren Mischung.

Die Trägerschicht (T) kann übliche Additive, wie z.B. Anti-Blockmittel, Antistatika und/oder Gleitmittel enthalten.

Vorzugsweise ist die Schichtdicke der Trägerschicht (T) kleiner als 50%, bevorzugt kleiner als 25% der Gesamtschichtdicke der erfindungsgemäßen Mehrschichtfolie. Bevorzugt weist die Trägerschicht (T) eine Schichtdicke im Bereich von 5 bis 100 $\mu$m, bevorzugter 6 bis 75 $\mu$m, noch bevorzugter 7 bis 50 $\mu$m, am bevorzugtesten 8 bis 35 $\mu$m und insbesondere 9 bis 15 $\mu$m auf.

Die Siegelschicht (S) der erfindungsgemäßen Mehrschichtfolie basiert bevorzugt zumindest auf einem Polymer ausgewählt aus der Gruppe bestehend aus Polyolefinen, Olefin-Copolymerisaten, Polyalkylmethacrylaten, Alkylmethacrylat-Copolymerisaten, Ionomeren, oder deren Mischung.

In einer bevorzugten Ausführung basiert die Siegelschicht (S) auf wenigstens einem Polyethylen ausgewählt aus der Gruppe bestehend aus mit Hilfe von Metallocenen hergestelltem Polyethylen (m-PE), Polyethylen hoher Dichte (HDPE), Polyethylen niedriger Dichte (LDPE) und linearem Polyethylen niedriger Dichte (LLDPE). Besonders bevorzugt basiert die Siegelschicht (S) auf m-PE, LDPE, LLDPE oder deren Mischung. Vorzugsweise basiert die Siegelschicht (S) auf wenigstens einem Polyethylen, besonders bevorzugt auf einer Mischung von m-PE (metallocen Polyethylen), besonders bevorzugt mit einer Dichte gleich oder größer 0,9 g/cm$^3$, und einem linearen Polyethylen geringer Dichte (LLDPE), vorzugsweise mit einer Dichte gleich oder größer 0,9 g/cm$^3$. In einer bevorzugten Ausführungsform enthält die Mischung 70 bis 85 Gew. % m-PE, 30 bis 15 Gew. % LLDPE und ggf. bis zu 5 Gew. % üblicher Additive, jeweils bezogen auf das Gesamtgewicht der Siegelschicht (S). Die Siegelschicht (S) kann auch auf wenigstens einem Polypropylen und/oder Propylen-Copolymerisat, vorzugsweise einem Propylen-Ethylen-Copolymerisat, basieren. In einer bevorzugten Ausführungsform basiert die Siegelschicht (S) auf zumindest einem Acrylsäure-Copolymerisat, insbesondere Ionomer, d.h. auf einem Ethylen-Acrylsäure-Copolymerisat oder Ethylen-Methacrylsäure-Copolymerisat, welche jeweils zumindest teilweise, vorzugsweise bis 35 %, als Salz, vorzugsweise als Na- oder Zn-Salz, vorliegen (bevorzugt Surlyn®, z.B. zumindest teilweise als Zinksalz). Die Siegeltemperaturen liegen vorzugsweise im Bereich von 100°C bis 140°C. Die Schmelztemperatur der Siegelschicht (S) beträgt vorzugsweise 90 bis 140°C, besonders bevorzugt 95°C bis 130 °C. Die Siegelschicht (S) kann mit den üblichen Hilfsstoffen wie Antistatika, Gleitmitteln, Anti-Blockmitteln, Antifogmitteln, und/oder Abstandshaltern ausgerüstet werden.

Die Schichtdicke der Siegelschicht (S) beträgt bevorzugt höchstens 25 % der Gesamtschichtdicke der erfindungsgemäßen Mehrschichtfolie. Bevorzugt weist die Siegelschicht (S) eine Schichtdicke im Bereich von 5 bis 25 $\mu$m, bevorzugter 7,5 bis 20 $\mu$m und insbesondere 10 bis 20 $\mu$m auf.

In einer bevorzugten Ausführungsform weist die erfindungsgemäße Mehrschichtfolie neben der Trägerschicht (T), der Haftvermittlerschicht (H$_1$) und der Siegelschicht (S) eine sauerstoffdichte Barriereschicht (B) und/oder eine Haftvermittlerschicht (H$_2$) auf, vorzugsweise sowohl eine sauerstoffdichte Barriereschicht (B), als auch eine Haftvermittlerschicht (H$_2$).

Die Barriereschicht (B) basiert bevorzugt auf Polyvinylidenchlorid, einem Vinylidenchlorid-Copolymerisat, insbesondere einem Vinylidenchlorid-Methacrylsäure-Copolymerisat mit bis zu 10 Gew.-% Methacrylsäureeinheiten, oder deren Mischung. Auch Ethylen-Vinylalkohol-Copolymerisat (EVOH) ist grundsätzlich geeignet. Dem Fachmann sind geeignete Verfahren zur Messung der Sauerstoffdichtigkeit bekannt. Die Durchlässigkeit für Sauerstoff beträgt bevorzugt höchstens 70, bevorzugter höchstens 50, noch bevorzugter höchstens 40, am bevorzugtesten höchstens 30 und insbesondere höchstens 20 [cm$^3$ m$^{-2}$ d$^{-1}$ bar O$_2$], bestimmt nach DIN 53380. Bevorzugt wird die Dicke der Barriereschicht derart gewählt, dass diese Barrierewirkung erzielt wird. Dabei ist zu berücksichtigen, dass infolge der Thermoformung an den thermogeformten Bereichen der Mehrschichtfolie eine Verringerung der Schichtdicke erfolgt. Bevorzugt beträgt die Durchlässigkeit für Sauerstoff auch nach dem Thermoformen die vorstehend genannten Werte.

In einer bevorzugten Ausführungsform weist die Barriereschicht (B) eine Schichtdicke im Bereich von 5 bis 50 $\mu$m, bevorzugter 7,5 bis 25 $\mu$m und insbesondere 9 bis 15 $\mu$m auf.

Grundsätzlich kann die erfindungsgemäße Mehrschichtfolie unabhängig in einer oder mehreren Schichten zusätzlich übliche Zusatz- oder Hilfsstoffe enthalten. Zur Variation der Gleiteigenschaften der Mehrschichtfolie kann mindestens eine Schicht Gleitmittel enthalten. Die Gleitmittel sollten dabei vorzugsweise in der Trägerschicht (T) und/oder der Siegelschicht (S) enthalten sein, können jedoch zusätzlich auch in zumindest einer der dazwischenliegenden Schichten enthalten sein. Ferner kann die Mehrschichtfolie in einer oder mehreren Schichten übliche Stabilisatoren, Antioxidantien, Weichmacher, Processing-Aid, UV-Absorber, Füllmittel, Anti-Flammmittel, Antistatika, etc. enthalten. Derartige Stoffe sind dem Fachmann bekannt.

Besonders bevorzugte Ausführungsformen der erfindungsgemäßen Mehrschichtfolie sind in nachfolgender Tabelle zusammengefasst, wobei die Mehrschichtfolie dabei den Aufbau (T)//(H$_1$)//(B)//(H$_2$)//(S) aufweist:

| | | Zusammensetzung umfassend | Schichtdicke | | |
|---|---|---|---|---|---|
| | | | bevorzugt | bevorzugter | insbesondere |
| (T) | | Polyethylen und/oder Polypropylen | 5 bis 100 $\mu$m | 7 bis 50 $\mu$m | 9 bis 15 $\mu$m |
| (H$_1$) | | Ethylen-Vinylacetat-Copolymerisat | wenigstens 20 $\mu$m | wenigstens 25 $\mu$m | wenigstens 30 $\mu$m |
| (B) | | Polyvinylidenchlorid und/oder Vinylidenchlorid-Methacrylsäure-Copolymerisat | 5 bis 50 $\mu$m | 7,5 bis 25 $\mu$m | 9 bis 15 $\mu$m |
| (H$_2$) | | Ethylen-Vinylacetat-Copolymerisat | wenigstens 20 $\mu$m | wenigstens 25 $\mu$m | wenigstens 30 $\mu$m |
| (S) | | Polyethylen, Ethylen-Copolymerisat, Polypropylen, Propylen-Copolymerisat und/oder Ionomer | 5 bis 25 $\mu$m | 7,5 bis 20 $\mu$m | 10 bis 20 $\mu$m |

Eine besonders bevorzugte erfindungsgemäße Mehrschichtfolie hat folgenden Aufbau:

| Schicht | Dicke | Zusammensetzung |
|---|---|---|
| (T) | 15 ± 5 $\mu$m | Polypropylen |
| (H$_1$) | 36 ± 10 $\mu$m | Ethylen-Vinylacetat-Copolymerisat |
| (B) | 12 ± 5 $\mu$m | Polyvinylidenchlorid |
| (H$_2$) | 36 ± 10 $\mu$m | Ethylen-Vinylacetat-Copolymerisat |
| (S) | 10 ± 5 $\mu$m | Mischung aus m-PE und LLDPE |

Die erfindungsgemäße Mehrschichtfolie kann weitere Schichten enthalten, beispielsweise Schichten gleich oder verschieden basierend auf wenigstens einem Polymer ausgewählt aus der Gruppe bestehend aus Polyolefinen, Olefin-Copolymerisaten und Polyestern.

Die erfindungsgemäße Mehrschichtfolie kann bedruckt werden, wobei mindestens eine Schicht der Mehrschichtfolie bedruckt und/oder durch die Zugabe von Additiven wie organischen oder anorganischen Farbstoffen und Pigmenten eingefärbt werden kann.

In einer bevorzugten Ausführungsform ist die erfindungsgemäße Mehrschichtfolie transparent. Der Begriff "transparent" im Sinne der Erfindung bedeutet, dass ein Verpackungsgut durch die thermoformbare Mehrschichtfolie hindurch mit bloßem Auge betrachtet werden kann. Die Transparenz wird bevorzugt mit Hilfe von Densitometern quantifiziert. Derartige Methoden sind dem Fachmann geläufig. Bevorzugt kann als Maß für die Transparenz die Trübung als optischer Wert gemessen werden. Die Messung der Trübung erfolgt bevorzugt nach der ASTM-Prüfnorm D 1003-61 m, Procedure A, nach Eichung des Messgerätes mit Trübungsnormalen zwischen 0,3 und 34% Trübung. Als Messinstrument eignet sich beispielsweise ein Hazemeter der Fa. Byk-Gardner mit Ulbricht-Kugel, das in einem Raumwinkel von 8° bis 160° eine integrierte Messung der diffusen Lichtdurchlässigkeiten gestattet. Die erfindungsgemäßen Mehrschichtfolien weisen nach der Thermoformung bevorzugt eine nach dem vorstehend beschriebenen Verfahren bestimmte Trübung von weniger als 20%, bevorzugter weniger als 18%, noch bevorzugter weniger als 15%, am bevorzugtesten weniger als 10% und insbesondere weniger als 8% auf. Bevorzugt hat die Thermoformung auf die optischen Eigenschaften der erfindungsgemäßen Mehrschichtfolien keinen oder nur geringen Einfluss (bezogen auf Material gleicher Stärke).

Die erfindungsgemäße Mehrschichtfolie ist thermoformbar, vorzugsweise tiefziehfähig. Der Begriff "tiefziehfähig" im Sinne der Erfindung definiert ein Material, welches unter Wärmeeinwirkung auf einer geeigneten Vorrichtung "tiefgezogen" werden kann, d.h. unter Einwirkung von Druck (und/oder Vakuum) beispielsweise zu einem offenen Behälter, vorzugsweise zu einer Mulde ausgebildet werden kann. Es handelt sich dabei um ein Material, welches thermoplastische Eigenschaften aufweist, so dass es im erwärmten Zustand verformbar ist, bei Raumtemperatur jedoch eine ausreichende Formstabilität aufweist, so dass die durch Tiefziehen vorgegebene Form (z.B. Mulde) zunächst erhalten bleibt, ehe der Schrumpfprozess durch Wärmezufuhr eingeleitet wird.

Die erfindungsgemäße Mehrschichtfolie ist wärmeschrumpffähig. Dazu ist sie bevorzugt biaxial orientiert, wobei sie vorzugsweise ein Reckverhältnis in Längsrichtung (d.h. in Maschinenrichtung) von 1:5 bis 1:3, bevorzugt von 1:3,5 bis 1:4,5 und in Querrichtung von 1:5 bis 1:3, bevorzugt von 1:3,5 bis 1:4,5 aufweist. Die Schichtdickenangaben in der Beschreibung verstehen sich als die Schichtdicke der jeweiligen Schicht der erfindungsgemäßen Mehrschichtfolie nach der Längs- und Querorientierung.

Bei der erfindungsgemäßen Mehrschichtfolie können zur Verbesserung ihrer Abnutzung - und/oder Durchstoßfestigkeit eine oder alle Schichten miteinander vernetzt werden. Diese Vernetzung kann beispielsweise unter Verwendung von β-Strahlung (hochenergetischer Elektronen) erreicht werden. Die Bestrahlungsquelle kann ein beliebiger Elektronenstrahlgenerator sein, welcher in einem Bereich von ungefähr 150 kV bis ungefähr 300 kV arbeitet. Die Bestrahlung wird üblich bei einer Dosis bis zu 60 kGy vorgenommen, wobei eine bevorzugte Dosis im Bereich von 2 bis 15 Mrad liegt.

Die erfindungsgemäße Mehrschichtfolie weist bevorzugt eine Gesamtschichtdicke im Bereich von 50 bis 250 μm, bevorzugter 60 bis 200 μm, noch bevorzugter 70 bis 170 μm, am bevorzugtesten 80 bis 150 und insbesondere 90 bis 130 μm auf.

Die Herstellung der erfindungsgemäßen Mehrschichtfolie kann als Teilschritt ein Blas-, Flachfolien-, Beschichtungs-, Extrusions-, Coextrusions- oder entsprechendes Beschichtungs- oder Kaschierverfahren umfassen. Auch Kombinationen dieser Verfahren sind möglich. Derartige Verfahren sind dem Fachmann bekannt. In diesem Zusammenhang kann beispielsweise auf A.L. Brody, K.S. Marsh, The Wiley Encyclopedia of Packaging Technology, Wiley-Interscience, 2 edition (1997); W. Soroka, Fumdamentals of Packaging Technology, Institute of Packaging Professionals (1995); J. Nentwig, Kunststoff-Folien, Hanser Fachbuch (2000); und S.E.M. Selke, Understanding Plastics Packaging Technology (Hanser Understanding Books), Hanser Gardner Publications (1997) verwiesen werden. Es kommen bekannte, nach dem Stand der Technik übliche Herstellungsanlagen in Betracht. Im Fall der Flachfolien-Coextrusion werden bevorzugt Anlagen mit rascher Abkühlungsmöglichkeit, wie große Kühlwalzen, eingesetzt.

Die zum Schichtaufbau der Mehrschichtfolie eingesetzten Polymere sind kommerziell erhältlich und im Stand der Technik ausreichend beschrieben. Sie werden üblicherweise zur Herstellung der erfindungsgemäßen Mehrschichtfolien als Pellets oder Granulate, soweit notwendig in üblichen Mischapparaturen gemischt, und durch Schmelzen vorzugsweise mit Hilfe von Extrudern weiterverarbeitet. Ist die Mehrschichtfolie zur Verpackung von Lebensmitteln bestimmt, so sind alle eingesetzten Polymere für die Verwendung in Lebensmittelverpackungen zugelassen.

Die erfindungsgemäße Mehrschichtfolie eignet sich hervorragend zum Verpacken von Gütern, vorzugsweise von Lebensmitteln, besonders bevorzugt von verderblichen Lebensmitteln. Die Mehrschichtfolie ist beispielsweise geeignet für die Verpackung von lebensmitteln wie Fleisch, Fisch, Gemüse, Obst, Milchprodukten, Räucherwaren, Fertiggerichten, Getreide, Cerealien, Brot- und Backwaren, aber auch von anderen Gütern, wie z.B. medizinischen Produkten.

Ein weiterer Gegenstand der Erfindung betrifft die Verwendung einer thermoformbaren, wärmeschrumpffähigen, vorzugsweise der erfindungsgemäßen, Mehrschichtfolie zur Herstellung einer Verpackung bzw. einer Verpackungsmulde, vorzugsweise für ein Lebensmittel. Bei der Herstellung einer Verpackung wird bevorzugt aus der Mehrschichtfolie zunächst durch Thermoformung eine wärmeschrumpffähige Verpackungsmulde hergestellt. Wegen der besonderen Eigenschaften der Mehrschichtfolie wird vorzugsweise die Wärmeschrumpffähigkeit, insbesondere auch im thermogeformten Bereich der Mehrschichtfolie, durch die Thermoformung im wesentlichen nicht beeinflusst.

Ferner betrifft die Erfindung ein Verfahren zur Herstellung einer thermogeformten, wärmeschrumpffähigen Verpackungsmulde umfassend die Thermoformung einer thermoformbaren, wärmeschrumpffähigen, insbesondere der erfindungsgemäßen, Mehrschichtfolie unter Bedingungen, bei denen die Wärmeschrumpffähigkeit im thermogeformten Bereich im wesentlichen nicht beeinflusst wird.

Die Thermoformung erfolgt bevorzugt durch Tiefziehen. Dabei können verschiedene Tiefziehverhältnisse verwirklicht werden, beispielsweise von 1:2 bis 1:5, vorzugsweise 1:4,5. Dem Fachmann ist bekannt, dass die individuelle Schichtdicke der Mehrschichtfolie an das beabsichtigte Tiefziehverhältnis angepasst werden kann, damit auch in den tiefgezogenen Bereichen nachher eine noch ausreichende Materialstärke vorhanden ist.

Die Erfindung betrifft auch eine thermogeformte, wärmeschrumpffähige Verpackungsmulde, welche nach dem vorstehend beschriebenen Verfahren erhältlich ist.

Die erfindungsgemäße Mehrschichtfolie kann auf herkömmlichen Apparaturen thermogeformt bzw. tiefgezogen werden. Bevorzugt wird jedoch zur Thermoformung der erfindungsgemäßen Mehrschichtfolie, d.h. zur Ausbildung einer thermogeformten, wärmeschrumpffähigen Verpackungsmulde, die nachfolgend beschriebene Tiefzieh-Vorrichtung zur Herstellung von tiefgezogenen Verpackungsmulden verwendet. In diesem Sinne ist die Eigenschaft der erfindungsgemäßen Mehrschichtfolie, dass ihre Wärmeschrumpffähigkeit durch die Thermoformung im wesentlichen nicht beeinflusst wird, bevorzugt auch auf eine Thermoformung mit Hilfe dieser nachfolgend beschriebenen Tiefzieh-Vorrichtung bezogen.

*Tiefzieh-Vorrichtung zur Herstellung von tiefgezogenen Verpackungsmulden:*

Es handelt sich um eine Tiefzieh-Vorrichtung zum Herstellen von tiefgezogenen, erfindungsgemäßen Verpackungsmulden aus einer erfindungsgemäßen Folienbahn mit einem Tiefziehwerkzeug, wobei das Tiefziehwerkzeug beim Tiefziehen gekühlt ist. Vorzugsweise weist das Tiefziehwerkzeug für das Kühlen beim Tiefziehen Kühlmittel auf. Derartige Kühlmittel können beispielsweise Kühlleitungen sein, die im Bereich des Tiefziehwerkzeugs angeordnet sind und durch die ein Kühlmedium, beispielsweise eine Kühlflüssigkeit oder ein Kühlgas, zirkuliert.

Vorzugsweise weist die Vorrichtung Haltemittel auf, so dass die Folienbahn zwischen dem Haltemittel und dem Tiefziehwerkzeug einspannbar ist. Vorzugsweise wird die Folienbahn mit dem Halternittel fixiert bevor das Tiefziehen erfolgt. in einer bevorzugten Ausführungsform ist dieses Haltemittel ebenfalls mit einem Kühlmittel versehen, das an denselben Kühlmittelkreislauf wie das Tiefziehwerkzeug oder an einen anderen Kühlkreislauf angeschlossen sein kann. Als Kühlmittel eignet sich insbesondere ein Kühlmittel, das beispielsweise auch in Kühlschränken und dergleichen Anwendung findet.

Vorzugsweise ist mindestens ein Kühlmittelkreislauf geregelt, beispielsweise temperaturgeregelt, so dass das Tiefziehwerkzeug und/oder das Haltemittel immer eine nahezu konstante Temperatur aufweist.

Weiterhin bevorzugt weist die Tiefzieh-Vorrichtung ein Heizmittel, besonders bevorzugt eine Heizplatte auf, mit der die Folienbahn insbesondere vor dem Tiefziehen aufheizbar ist. Nachdem die Foliebahn erwärmt worden ist und besonders bevorzugt vor dem Tiefziehen wird das Heizmittel wieder von der Folienbahn entfernt und/oder abgeschaltet, um eine Überhitzung der Folienbahn zu vermeiden und um zu verhindern, dass bei der Kühlung des Tiefziehwerkzeuges beziehungsweise des Haltemittels zu viel Wärme abgeführt werden muss. Vorzugsweise erfolgt die Erwärmung lokal sehr gezielt, so dass nur die gewünschten Bereiche und insbesondere nicht die Bereiche, die später gekühlt werden sollen, erhitzt werden. Der Fachmann erkennt, dass die Erwärmung und Kühlung auch gleichzeitig erfolgen kann, um zu vermeiden, dass sich gewisse Bereiche der Folienbahn während deren Erwärmung miterwärmen und/oder um eine unerwünschte Aufwärmung dieser Bereiche zu vermindern. Vorzugsweise wird die Folienbahn erst teilweise aufgeheizt und vor und beim Tiefziehen gekühlt.

In einer weiteren bevorzugten Ausführungsform weist die Tiefzieh-Vorrichtung Vakuum- und/oder Druckmittel auf, mit der die Folienbahn in das Tiefziehwerkzeug hineingedrückt bzw. hineingezogen wird und dabei seine abschließende Form erhält. Die Tiefzieh-Vorrichtung eignet sich insbesondere zum Herstellen von erfindungsgemäßen Verpackungsmulden für Verpackungen. Sie kann vorzugsweise Bestandteil einer Verpackungsmaschine sein, vorzugsweise einer sogenannten Form-Fill-Seal-Verpackungsmaschine.

Unter Anwendung der vorstehend beschriebenen Tiefzieh-Vorrichtung wird die erfindungsgemäße Folienbahn beim Tiefziehen gekühlt und dadurch eine tiefgezogene schrumpffähige Verpackungsmulde aus einer Folienbahn hergestellt. Vorzugsweise wird die Folienbahn dabei vor dem Tiefziehen eingespannt. Weiterhin bevorzugt wird die Folienbahn vor dem Tiefziehen erwärmt. Vorzugsweise erfolgt das Erwärmen und Kühlen zeitlich versetzt, wobei das Erwärmen vorzugsweise vor dem Kühlen erfolgt. Vorzugsweise wird die Folienbahn teilweise aufgeheizt vor und beim Tiefziehen gekühlt. Das Tiefziehen kann auf jede dem Fachmann geläufige Art und Weise erfolgen. Vorzugsweise erfolgt das Tiefziehen jedoch durch Über- und/oder Unterdruck (Vakuum).

Bevorzugte Ausführungsformen der Tiefzieh-Vorrichtung werden im Zusammenhang mit Figuren 1 bis 6 näher erläutert. Figur 1 zeigt die Vorrichtung vor dem Tiefziehen. Figur 2 zeigt das Erwärmen der erfindungsgemäßen Folienbahn. Figur 3 zeigt das Tiefziehen zu der Verpackungsmulde. Figur 4 zeigt das Lösen der Halterung. Figur 5 zeigt die resultierende erfindungsgemäße Verpackungsmulde. Figur 6 zeigt die erfindungsgemäße Tiefzieh-Vorrichtung.

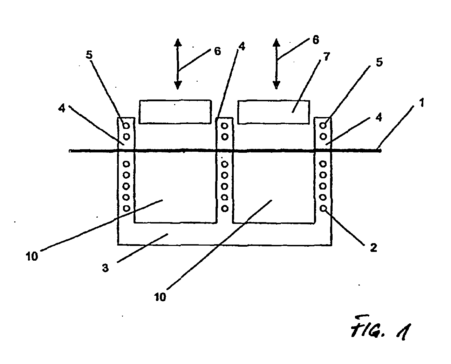

In Figur 1 ist die Tiefzieh-Vorrichtung dargestellt, die ein Tiefziehwerkzeug 3 mit mehreren Tiefziehkammern 10 aufweist. Erfindungsgemäß ist dieses Tiefziehwerkzeug gekühlt, wobei die Kühlung in dem vorliegenden Fall durch Bohrung 2 erfolgt, durch die ein Kühlmedium geführt wird. Oberhalb des Tiefziehwerkzeuges 3 befindet sich die zu verformende, erfindungsgemäße, schrumpffähige Folienbahn 1, die zwischen dem Tiefziehwerkzeug 3 und einem Klemmrahmen 4 eingespannt ist. Der Klemmrahmen 4 ist in dem vorliegenden Fall mittels der Bohrung 5, durch die ein Kühlmittel geführt wird, ebenfalls kühlbar. Oberhalb der Folienbahn 1 befinden sich Heizplatten 7, die, wie durch die Doppelpfeile 6 dargestellt, anhebbar bzw. absenkbar sind. Der Fachmann weiß, dass das Tiefziehwerkzeug 3 ebenfalls vertikal bewegbar ist.

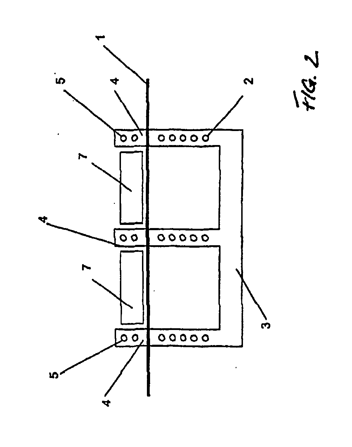

Figur 2 zeigt das Erwärmen der zwischen dem Klemmrahmen 4 und dem Tiefziehwerkzeug 3 eingespannten erfindungsgemäßen Folienbahn 1. Dafür wurden die Heizplatten 7 abgesenkt, so dass sie vorzugsweise in Kontakt mit der Folienbahn stehen. Die Folienbahn wird solange aufgewärmt, bis sie im Bereich der Wärmeplatte die gewünschte Temperatur aufweist. Vorzugsweise erfolgt die Erwärmung zeitgesteuert.

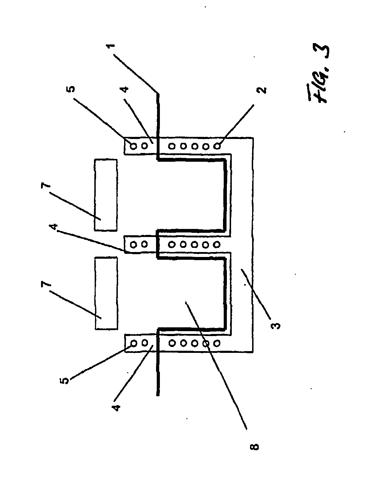

Sobald die Folie hinreichend erwärmt wurde, werden die Heizplatten wieder angehoben und das Tiefziehen der schrumpffähigen Folienbahn 1 zur Herstellung der erfindungsgemäßen Verpackungsmulden 8 erfolgt (Fig. 3). In dem vorliegenden Fall sind die Tiefziehkammern 10 mit Vakuum beaufschlagbar, mit dem die Folienbahn wie dargestellt verformt wird. Während des gesamten Aufheiz- und Tiefziehprozesses werden das Tiefziehwerkzeug und der Klemmrahmen gekühlt.

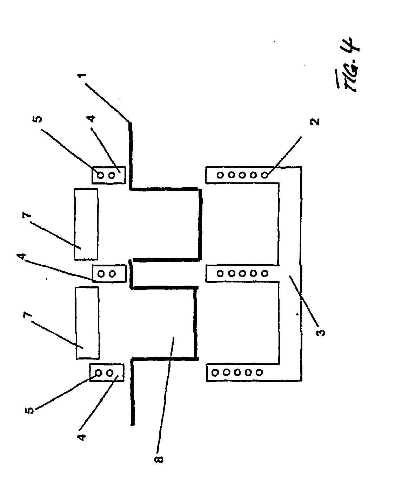

Sobald die Folie 1 zu Verpackungsmulden 8 tiefgezogen ist (Figur 4), wird das Tiefziehwerkzeug 3 abgesenkt, so dass sich die erfindungsgemäßen Verpackungsmulden 8 aus dem Tiefziehwerkzeug 3 entformen. Das Tiefziehwerkzeug wird soweit abgesenkt, dass die hergestellten Verpackungsmulden aus dem Tiefziehbereich heraustransportiert werden können und eine neuerliche Verformung der Folienbahn 1 erfolgen kann.

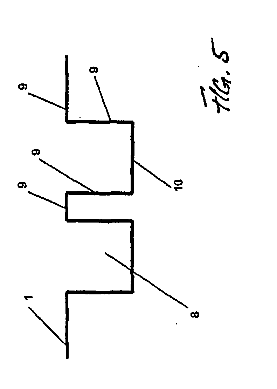

In Figur 5 sind die fertiggestellten erfindungsgemäßen Verpackungsmulden dargestellt. Durch die Kühlung der Tiefziehform sind die Packungsränder 9 und/oder der Boden der Verpackung gerade, weil die Folienbahn nach dem Tiefziehen gar nicht oder nur sehr geringfügig nach oder beim Tiefziehen schrumpft. Die erhaltenen tiefgezogenen Verpackungsmulden sind daher wärmeschrumpffähig, wobei ihre Wärmeschrumpffähigkeit durch das Thermoformen im wesentlichen nicht beeinflusst ist.

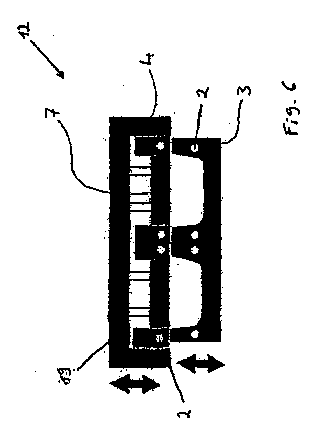

Figur 6 zeigt die Tiefziehvorrichtung zur Herstellung von tiefgezogenen Kunstoffverpackungsmulden aus einer schrumpffähigen, erfindungsgemäßen Folienbahn. Die Vorrichtung 12 weist ein Unterwerkzeug 3 und ein Oberwerkzeug 19 auf. Das Unterwerkzeug 3 weist das Negativ der Form der herzustellenden Verpackungsmulde auf. In das Unterwerkzeug sind Kanäle 2 eingearbeitet, durch die ein Kühlmittel zirkuliert mit dem das Unterwerkzeug gekühlt wird. Wie durch den Doppelpfeil angedeutet, ist das Unterwerkzeug absenkbar bzw. anhebbar. Zwischen dem Unterwerkzeug und dem Oberwerkzeug verläuft die nicht dargestellte Folienbahn. Das Oberwerkzeug 19 ist ebenfalls anhebbar bzw. absenkbar. Dasselbe gilt für den Klemmrahmen 4 und die Heizmittel 7. Mit dem Klemmrahmen wird die Folienbahn gegen das Unterwerkzeug gedrückt und festgeklemmt, damit sie tiefgezogen werden kann. Der Klemmrahmen 4 weist darüber hinaus auch Kanäle 2 auf, durch die ein Kühlmittel zirkuliert, so dass der Rahmen der Klemmrahmen 4 kühlbar ist. Die Kühlung des Klemmrahmens hat insbesondere den Vorteil, dass sich die Folienbahn, die sich unter dem Klemmrahmen befindet nicht erwärmt wird und somit spannungsfrei ist. An diesen Bereich wird später die Oberfolie gesiegelt. Dadurch dass dieser Bereich spannungsfrei ist, weist die Siegelung der später resultierenden Verpackung eine sehr hohe Dichtigkeit auf. Die erfindungsgemäße Tiefzieh-Vorrichtung weist pro herzustellender Verpackungsmulde ein Heizelement 7 auf. Mit diesen Heizelementen wird die Folienbahn möglichst schnell erwärmt. Um den Wärmeübergang zwischen der Folienbahn und der jeweiligen Heizmitteln zu verbessert, kann in dem Bereich unter der Folienbahn ein Überdruck erzeugt werden, der die Folienbahn gegen das Heizmittel drückt und damit den Wärmeübergang verbessert. Der Fachmann erkennt, dass auch zwischen der Folienbahn und dem Heizmittel 7 ein Unterdruck erzeugt werden kann, der die Folienbahn gegen das Heizmittel saugt. Sobald die Folienbahn ihre Plastifizierungstemperatur erreicht hat, wird sie mit den Heizmitteln 7, die dann gleichzeitig als Stempel wirken in die jeweilige Tiefziehform gedrückt und/oder es wird in der Tiefziehform ein Unterdruck angelegt, der die Folienbahn in die Tiefziehform hineinsaugt. Diese Tiefziehform ist gekühlt, so dass die Folienbahn beim und/oder unmittelbar nach dem Tiefziehen gekühlt wird. Diese Kühlung erfolgt so lange bis die Folienbahn eine Temperatur erreicht hat, bei der eine ungewollte Rückverformung der Verpackungsmulde aufgrund der Schrumpffähigkeit der Folie ausgeschlossen werden kann.

Ein weiterer Aspekt der vorliegenden Erfindung betrifft daher auch eine thermogeformte, wärmeschrumpffähige Verpackungsmulde, vorzugsweise umfassend eine erfindungsgemäße Mehrschichtfolie bzw. aus einer erfindungsgemäßen Mehrschichtfolie geformt, wobei die Wärmeschrumpffähigkeit im thermogeformten Bereich in Längs- und in Querrichtung jeweils wenigstens 20%, bevorzugt wenigstens 25%, bevorzugter wenigstens 30%, noch bevorzugter wenigstens 35%, am bevorzugtesten wenigstens 40% und insbesondere wenigstens 45% beträgt.

Die erfindungsgemäße, thermogeformte, wärmeschrumpffähige Verpackungsmulde kann vorteilhaft zur Herstellung einer Verpackung, vorzugsweise für ein Lebensmittel, verwendet werden. Dazu wird bevorzugt das Verpackungsgut in die thermogeformte, wärmeschrumpffähige Verpackungsmulde eingebracht und eine wärmeschrumpffähige oder nicht schrumpffähige Deckelfolie über die Öffnung der Verpackungsmulde gebracht. Anschließend erfolgt die Heißsiegelung der ggf. wärmeschrumpffähigen Deckelfolie auf die thermogeformte, wärmeschrumpffähige Verpackungsmulde unter Bedingungen, bei denen sowohl die Wärmeschrumpffähigkeit der Verpackungsmulde im thermogeformten Bereich als auch die ggf. vorhandene Wärmeschrumpffähigkeit der Deckelfolie im wesentlichen nicht beeinflusst wird. Als wärmeschrumpffähige Deckelfolie eignet sich vorzugsweise eine wärmeschrumpffähige, erfindungsgemäße Mehrschichtfolie. Vorzugsweise wird als Deckelfolie eine wärmeschrumpffähige, erfindungsgemäße Mehrschichtfolie verwendet, die mit der Mehrschichtfolie, aus der die thermogeformte Verpackungsmulde hergestellt wird, identisch ist.

Es ist aber auch möglich als Deckelfolie eine nicht schrumpffähige, vergleichsweise starre, vorzugsweise mehrschichtige Verbundfolie aus thermoplastischen Materialien als 2. Verpackungselement zum Verschließen der schrumpffähigen Verpackungsmulde zu verwenden.

Besonders bevorzugt eignet sich hierfür eine Mehrschichtfolie die folgenden Sequenzen von Schichten aufweist:

A) eine Basisschicht aus ggf. geschäumten Polyolefinschaum, vorzugsweise geschäumten Propylen- Homo- und/oder Copolymeren oder deren Mischung, oder ggf. geschäumten Polyester, vorzugsweise geschäumten Polyethylen/Terephtalat,
B) eine Schicht bestehend aus wenigstens einem Polyolefin oder Polyester der Schicht A)
C) ggf. eine Verbindungsschicht basierend auf einem Polyolefin, das vorzugsweise auf demjenigen Monomer basiert, das das Hauptmonomer des Polyolefins der Schicht A) ist oder einem Polyester der Schicht A)
D) ggf. eine Haftvermittlerschicht,
E) ggf. eine gas- und/oder aromadichte Barriereschicht,
F) eine Haftvermittlerschicht,
G) eine siegelfähige und/oder peelfähige Oberflächenschicht

Vorzugsweise zeichnet sich die Mehrschichtfolie dadurch aus, dass die Gesamtdicke der Schichten A) und B) im Bereich von 0,5 bis 2 mm und die Dicke der Schicht B) im Bereich von $^1/_6$ bis ½ der Dicke der Schicht A) liegt. Vorzugsweise ist die Gesamtdicke der Schichten A) und B) im Bereich von 0,6 bis 1,4 mm und die Dicke der Schicht B) im Bereich von $^1/_6$ bis ⅓ der Dicke der Schicht A).

Die Schicht A) ist vorzugsweise geschäumt und besteht vorzugsweise aus wenigstens einem Polyolefin, besonders bevorzugt aus geschäumtem Propylen-, Homo- und/oder Copolymeren, da diese Materialien bereits mit einer geringen Dicke und einer geringen Dichte die notwendige Biegefestigkeit aufweisen. Es ist auch möglich, zur Herstellung der Schaumschicht A) Mischungen von Polyolefinen einzusetzen. Dabei eignet sich insbesondere eine Mischung aus Polypropylen mit Langkettenverzweigung und damit hoher Schmelzfestigkeit und einem Propylen/Ethylencopolymer, wie z. B. einem heterophasigen Propylen-Ethylen-Blockcopolymeren. Insbesondere eignet sich eine Mischung aus einem Polypropylen mit einer Langkettenverzweigung und einem Schmelzindex MFI im Bereich von 1,4 bis 4,2 g/10 min und einem heterophasigen Propylen-Ethylen-Blockcopolymer in einem Mischungsverhältnis von 1:1.

Schaumschichten aus Polyolefinen, vorzugsweise aus Polypropylen ggf. in Mischung mit Polyolefincopolymeren, vorzugsweise Propylen-Ethylen-Copolymeren, die zur Herstellung der erfindungsgemäßen Verpackungen verwendet werden, haben vorzugsweise eine Dichte von 0,1 bis 0,8 g/cm³, besonders bevorzugt 0,25 bis 0,5 g/cm³ und weisen eine Zellenzahl von 75 bis 300 Zellen/mm³ auf. Die Dichte und die Zellenzahl kann durch die Verfahrensparameter, wie z. B. der Extrusionstemperatur oder andere Verfahrensparameter während der vorzugsweisen Herstellung der Schaumschicht durch Extrusion und Expansion variiert werden. In derselben Art und Weise kann eine verschäumte Polyesterschicht A) hergestellt werden.

Die Schicht B) aus kompaktem Polyolefin besteht im wesentlichen aus einem vorzugsweise Polypropylen der geschäumten Basisschicht A). Sofern diese Basisschicht aus geschäumtem Polypropylen oder einer geschäumten Mischung aus Polypropylen und Propylen-Ethylen-Copolymer ,besteht, besteht die kompakte Polyolefinschicht B) vorzugsweise aus Polypropylen oder einem Propylen-Ethylen-Copolymer. Besonders bevorzugt ist ein heterophasiges Propylenehtylen Blockcopolymers. Der Schmelzindex (MFI) der zur Herstellung der Schicht B) verwendeten Polyolefine liegt vorzugsweise im Bereich von 1,8 bis 5,5 g/10 min, sofern die Schicht A) aus verschäumtem Polyester besteht wird zur Herstellung der Schicht B) dieser Polyester verwendet. Die Dicke der Schicht B) beträgt $^1/_6$ bis ½, besonders bevorzugt $^1/_6$ bis ⅓ der Dicke der Schicht A).

Die Schicht C) ist vorhanden, sofern die Schichten D) bis G) durch Coextrusion, vorzugsweise durch Folienblascoextrusion, vorgefertigt werden und mit den übrigen Schichten zu verbinden sind. Die Schicht C) basierend auf einem Polyolefin, das vorzugsweise aus einem Monomer hergestellt wurde, das auch das Hauptmonomer der Polyolefine der Schaumschicht A) ist, oder auf dem Polyester der Schicht A). Sofern daher die Schicht A) aus einem verschäumten Polypropylen und ggf. einem Propylen-Ethylen-Copolymer besteht, kann die Schicht C) aus Polypropylen bestehen, das ggf. mit Maleinsäureanhydrid gepfropft ist. Auch Copolymere aus Ethylen/Vinylacetat können als Material der Schicht C) verwendet werden. Die Dicke der Schicht C) beträgt vorzugsweise 5 bis 25, besonders bevorzugt 8 bis 15 μm.

Sofern die erfindungsgemäßen Mehrschichtfilme eine geringe Gasdurchlässigkeit, d. h. geringe Sauerstoff- und Feuchtigkeitsdurchlässigkeit sowie einen Aromaschutz aufweisen sollen, weisen sie eine Barriereschicht E) auf. Diese Barriereschicht ist vorzugsweise aus einem Ethylen/Vinylalkohol-Copolymer, das einen Ethylengehalt von 32 bis 45 Mol%, vorzugsweise 35 bis 42 Mol%, aufweist. Die Barriereschicht E) ist mit Hilfe einer Haftvermittler D) bzw. F) an ihrer jeweiligen Oberfläche mit der Verbindungsschicht C) bzw. mit der Oberflächenschicht G) verbunden. Als Material wird dafür vorzugsweise ein Propylencopolymer bzw. ein Polyethylen, das mit Maleinsäureanhydrid gepfropft ist, verwendet.

Die Oberflächenschicht G) ist vorzugsweise siegelfähig und/oder peelfähig. Daher wird zur Herstellung dieser Schicht vorzugsweise ein Polyethylen niedriger Dichte (LDPE) mit einem Schmelzindex (MFI) im Bereich von 0,5 bis 0,8 g/10 min, vorzugsweise im Bereich von 1 bis 5 g/10 min (2,16 kg, 190°C gemessen gemäß ASTM D1238) oder ein Ionomerpolymer, wie z. B. ein Copolymer aus einem α-Olefin und einem ethylenisch ungesättigten Monomeren mit einer Carboxylgruppe, wobei die Carboxylgruppen in einer Menge von 20 bis 100 Gew.% als Metallsalz, vorzugsweise als Zinksalz, vorliegen oder einem Ethylen-Vinylacetatcopolymer mit einem Vinylacetatgehalt von 3 bis 30 Gew.%, vorzugsweise 4 bis 6 Gew.%, zur Herstellung der siegelfähigen Schicht verwendet.

Gemäß einer besonders bevorzugten Ausführungsform ist die Siegelschicht auch peelfähig. Dafür wird als Schichtmaterial vorzugsweise eine Mischung aus LDPE und einem Polybutylen (PB) verwendet. Die Mischung enthält dafür 15 bis 30 Gew.% vorzugsweise 20 bis 28 Gew.%, Polybutylen. Vorzugsweise weist das Polybutylen eine Schmelzindex (MFI) im Bereich von 0,3 bis 2,0 g/10 min (190°C und 216 kg gemäß ASTM D1238) auf.

Vorzugsweise liegt die Dicke der Oberflächenschicht im Bereich von 10 bis 50 μm, vorzugsweise von 15 bis 30 μm.

Wenn LDPE als Polymer zur Herstellung der Siegelschicht verwendet wird und der Mehrschichtfilm umfaßt eine Barriereschicht, dann ist in aller Regel zur Verbindung der Barriereschicht und der Siegelschicht eine Haftvermittlerschicht notwendig, sofern nicht als Barriereschichtmaterial Ethylen-Vinylalkoholcopolymer verwendet wird. Als Haftvermittlermaterial kann ein Polyolefin, vorzugsweise ein Polyethylen gepfropft mit Maleinsäureanhydrid, verwendet werden. Es ist aber auch möglich, eine Mischung aus LDPE und LLDPE im Verhältnis 3:1 bis 4:1 als Haftvermittlermittel zu verwenden. Die Dicke der jeweiligen Haftvermittlerschicht liegt im Bereich von 2 bis 8 $\mu$m, vorzugsweise im Bereich von 3 bis 6 $\mu$m.

Die Oberflächenschicht G) kann übliche und bekannte Gleitmittel und Antiblockmittel, wie z. B. Erukasäureamid, Polyalkylsiloxane, wie z. B. Polydimethylsiloxan und/oder Siliciumdioxid enthalten. Alle oder nur einzelne Schichten können Stabilisatoren und weitere Additive bekannter Art enthalten.

Außerdem kann die Schicht B) 0,5 bis 2 Gew.% eines weißen Pigmentes, wie z. B. Kaolin, Kalziumcarbonat, Talk, Titandioxid oder deren Mischungen enthalten. Solche anorganischen Pigmente werden dem Polymer, aus dem die Schicht B) gefertigt wird, vorzugsweise in Form von Masterbatch, das 30 bis 50 Gew.% aus recycliertem erfindungsgemäßen Mehrschichtfilmmaterial bestehen.

Die Mehrschichtfilme, die sich als Deckelfolien eignen, werden vorzugsweise durch das übliche Folienblascoextrusionsverfahren oder durch Coextrusiongießfilmverfahren, soweit es die Sequenz der Schichten C) bis G) betrifft, hergestellt und vorzugsweise durch ein Extrusionlaminierungsschritt mit der Polyolefin- oder Polyesterschicht A) die ggf. vorzugsweise geschäumt ist, verbunden. Dazu wird die Schicht A) und dem Mehrschichtfilm, bestehend aus den Schichten C) und G), so zusammengeführt, dass dazwischen die Schicht B) extrudiert wird. Unmittelbar nach der Extrusion wird auf das so hergestellte Laminat ein genügend großer Druck ausgeübt, damit die Schichten A) bis G) ausreichend miteinander verbunden werden.

Es ist aber auch möglich, solche Mehrschichtfolien durch Coextrusion herzustellen, wobei auch die Schicht A) gleichzeitig mit den übrigen Schichten ggf. unter Weglassung der Schicht C) coextrudiert und im Falle der Schicht A) ggf. expandiert wird.

Die Biegefestigkeit der nicht schrumpffähigen Mehrschichifolien, die als Deckelfolie zum Einsatz kommen, ist vorzugsweise so groß, dass sie den Schrumpfkräften der erfindungsgemäßen, wäremschrumpffähigen Mehrschichtfolien, aus denen jeweils eine erfindungsgemäße Verpackungsmulde hergestellt wird, so standhalten, dass der Deckel der Verpackung sich nicht verbiegt bzw. nicht wölbt, sondern weitgehend flach, d. h. eben bleibt. Dadurch wird nicht nur das ansprechende Aussehen der Verpackung bewährt, sondern auch deren Lager- und Stapelfähigkeit sowie Präsentierbarkeit nicht beeinträchtigt.

Vorzugsweise weisen dementsprechende Deckelfolien eine Biegefestigkeit (gemessen nach DIN 8075 Sigma 3,5 %) von 10 bis 20 M Pa auf, um Schrumpfkräften von Verpackungsmulden von 0,7 M Pa bis 2 M Pa (gemessen nach DIN 53369) standzuhalten.

Die Erfindung betrifft daher auch versiegelte, wärmeschrumpffähige Verpackungen.

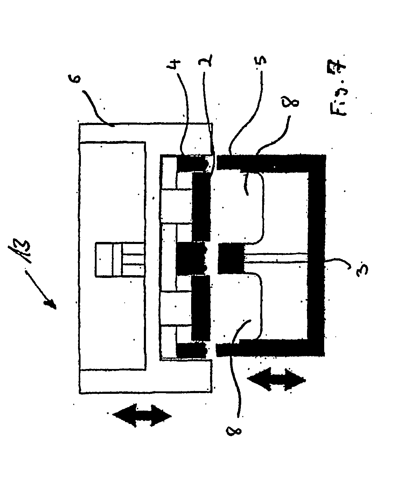

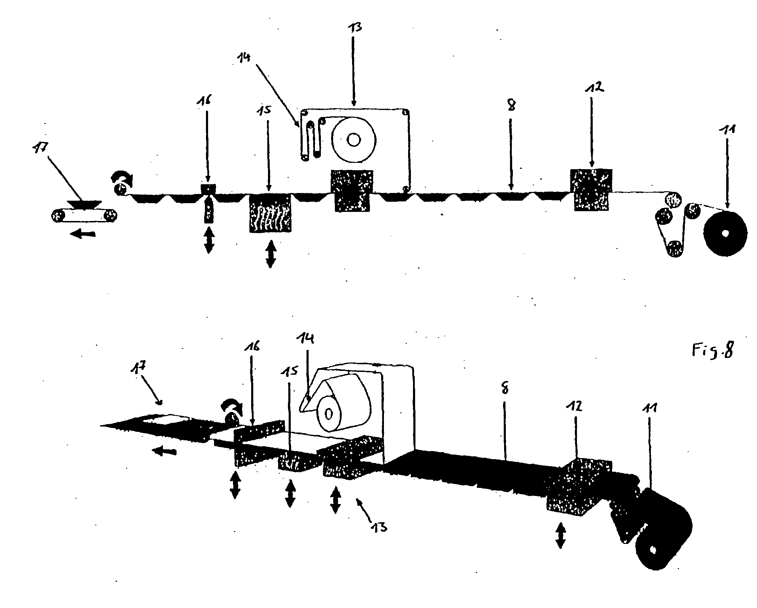

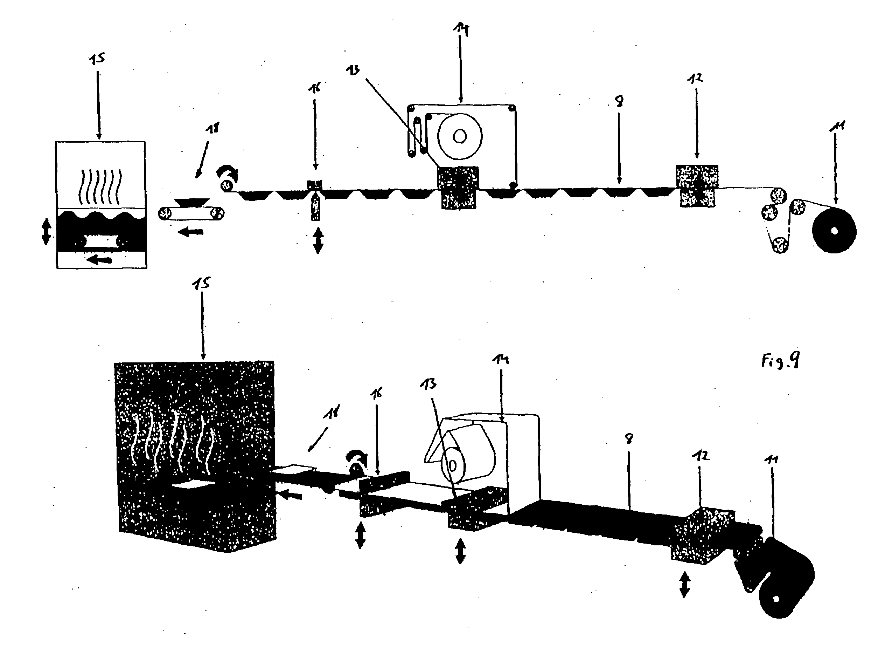

Für die Herstellung solcher erfindungsgemäßen Verpackungen werden vorzugsweise Verpackungsmaschinen, besonders bevorzugt solche gemäß Figur 8 oder Figur 9, eingesetzt, die vorzugsweise die vorstehend erläuterte Tiefziehvorrichtung als Tiefziehstation und vorzugsweise die nachstehend beschriebene Siegelvorrichtung, besonders bevorzugt eine Siegelvorrichtung gemäß Figur 7 als Siegelstation aufweisen.

Mit solchen erfindungsgemäßen Verpackungsmaschinen können Verpackungen aus einer schrumpffähigen Verpackungsmulde und einer schrumpffähigen Deckelfolie (Oberfolie) hergestellt werden. Solche Verpackungen werden als Skrinkpack bezeichnet. Figur 9 zeigt eine Verpackungsmaschine zur Herstellung von sogenannten shrinkpacks. Die Oberfolie (Deckelfolie) kann jedoch auch aus einer nicht schrumpffähige Folienbahn, wie vorstehend beschrieben bestehen. Solche Verpackungen werden als shrinkplate bezeichnet. Figur 8 zeigt eine Verpackungsmaschine zur Herstellung von sogenannten shrinkplates.

Die Siegelvorrichtung der erfindungsgemäßen Verpackungsmaschine weist ein Unterwerkzeug und ein Oberwerkzeug auf, wobei sich das Unterwerkzeug unterhalb und sich das Oberwerkzeug oberhalb der Folienbahnen, die miteinander verbunden werden, befindet. Das Unterwerkzeug und das Oberwerkzeug werden zum Siegeln der Oberfolie (= Deckelfolie) an die Unterfolie gegeneinander gepresst. Dabei erfolgt die Siegelung der beiden Folienbahnen aneinander unter Temperatureinfluß. Erfindungsgemäß ist das Unterwerkzeug und/oder das Oberwerkzeug gekühlt. Diese Kühlung kann beispielsweise durch Zirkulation eines Kühlmediums durch Kanäle, die in das Unter- und/oder das Oberwerkzeug eingearbeitet sind, erfolgen. Als Kühlmedium eignet sich Wasser oder die von Kühlschränken bekannten Medien. Vorzugsweise erfolgt die Kühlung der Oberfolie und/oder der Verpackungsmulden so, dass kein unkontrollierter Schrumpf der jeweiligen Folie einsetzt, d.h. die Temperatur der jeweiligen Folienbahn darf die Temperatur, bei der der Schrumpf einsetzt nie erreichen oder überschreiten.

Vorzugsweise ist zumindest das Unterwerkzeug, besonders bevorzugt auch das Oberwerkzeug vertikal verschiebbar.

Weiterhin bevorzugt weist das Ober- oder das Unterwerkzeug ein Siegelmittel, beispielsweise einen Siegelrahmen, auf, das(der) beheizt ist. Die Beheizung erfolgt in der Regel durch eine elektrische Beheizung. Die Beheizung sollte bei der vorliegenden Erfindung vorteilhafterweise auf das Siegelmittel beschränkt sein, damit eine unnötige Kühlung des jeweiligen Werkzeugs nicht vonnöten ist.

An dem Werkzeug, das den Siegelrahmen nicht aufweist, ist vorzugsweise eine Siegelbrille angeordnet. Vorzugsweise weist die Siegelbrille eine Gummigegenlage auf. Weiterhin bevorzugt ist die Siegelbrille gekühlt und besonders bevorzugt ebenfalls vertikal verschiebbar.

Das Oberwerkzeug ist vorzugsweise vertikal verschieblich angeordnet. Weiterhin bevorzugt ist das Oberwerkzeug gekühlt, um zu vermeiden, dass es sich mit der Zeit aufheizt und dadurch eine ungewollte Schrumpfung der ggf. schrumpffähige Oberfolie bewirkt. Diese Ausführungsform ist insbesondere dann von Vorteil, wenn die Oberfolie eine Schrumpffolie ist.

Vorzugsweise weist die Siegelvorrichtung eine Kühlplatte auf, die besonders bevorzugt im Bereich der Oberfolie angeordnet ist. Diese Kühlplatte ist vorzugsweise ebenfalls vertikal verschiebbar angeordnet. Für den Fall, dass die Oberfolie auf mehrere Verpackungsmulden gleichzeitig gesiegelt wird, ist vorzugsweise im Bereich jeder Verpackungsmulde jeweils eine Kühlplatte angeordnet.

Ein weiterer Gegenstand der vorliegenden Erfindung ist ein Verfahren zur Herstellung von schrumpffähigen tiefgezogenen Verpackungen aus einer erfindungsgemäßen Verpackungsmulde und einer Oberfolie (Deckelfolie), wobei mindestens die Verpackungsmulde aus einer erfindungsgemäßen, schrumpffähigen Mehrschichtfolie durch Tiefziehen hergestellt wird, bei dem die Folienbahn erst teilweise aufgeheizt und vor und beim Tiefziehen teilweise gekühlt wird und bei dem beim Siegeln der Oberfolie auf die Verpackungsmulde die Oberfolie und/oder die Verpackungsmulde gekühlt wird.

Beim Siegeln der Verpackungselemente, von denen mindestens ein Element aus einer erfindungsgemäßen Schrumpffolie hergestellt wird, erfolgt der Wärmeeintrag für die Siegelung von der der Schrumpffolie abgewandten Seite der Verpackung. Vorzugsweise erfolgt der Wärmeeintrag bei der Siegelung bei diesem erfindungsgemäßen Verfahren von unten oder von oben.

Die folgenden Ausführungen gelten für beide erfindungsgemäße Verfahren.

Es war für den Fachmann überaus erstaunlich und nicht zu erwarten, dass sich mit einem derartigen Verfahren Verpackungsmulden mit geraden Rändern herstellen lassen und/oder dass keine ungewollte Schrumpfung nach dem Tiefziehen erfolgt. Dadurch lassen sich Verpackungsbehälter mit einer ganz neuen Erscheinungsform und einer sehr reproduzierbaren Größe herstellen. Mit den erfindungsgemäßen Verfahren wird auch verhindert, dass eine ungewolltes, von dem Siegelwerkzeug initiiertes Schrumpfen der Schrumpffolie erfolgt.

Wie bereits ausgeführt, wird die Folienbahn vor dem Tiefziehen vorzugsweise eingespannt. Vorzugsweise erfolgt das Einspannen der Folienbahn mit einem Klemmrahmen. Besonders bevorzugt ist dieser Klemmrahmen gekühlt und am meisten bevorzugt vertikal verschiebbar angeordnet. Ein gekühlter Klemmrahmen hat den Vorteil, dass der spätere Siegelbereich zumindest nahezu spannungsfrei ist, was zu weniger Leckagen im Siegelbreich führt.

Weiterhin bevorzugt wird die erfindungsgemäße Folienbahn vor dem Tiefziehen aufgewärmt. Vorzugsweise erfolgt das Aufwärmen und Kühlen zeitlich versetzt, wobei das Aufwärmen vorzugsweise vor dem Kühlen erfolgt. Weiterhin bevorzugt wird eine Oberfläche der Folienbahn aufgewärmt und die gegenüberliegende Oberfläche gekühlt. In einer weiteren bevorzugten Ausführungsform des erfindungsgemäßen Verfahrens erfolgt das Erwärmen und Kühlen gleichzeitig, wobei die Folienbahn bereichsweise aufgewärmt und abgekühlt wird. Besonders bevorzugt wird die Folienbahn in Richtung der Aufheiz- bzw. Abkühlmittel gedrückt oder gesaugt, um einen möglichst guten Wärmeübergang zu erzielen. Für den Fall, dass mehrere Verpackungsmulden gleichzeitig hergestellt werden, wird jeder herzustellenden Verpackungsmulde vorzugsweise ein Heizmittel zugeordnet. Dadurch kann die benötigte Wärme lokal sehr gezielt in die Folienbahn eingebracht werden.

Wie bereits ausgeführt, kann das Tiefziehen auf jede dem Fachmann geläufige Art und Weise erfolgen. Vorzugsweise erfolgt das Tiefziehen jedoch durch Über-und/oder Unterdruck (Vakuum). Weiterhin bevorzugt erfolgt das Tiefziehen mit einem Stempel oder das Tiefziehen wird mit einem Stempel unterstützt, wobei der Stempel und das Heizmittel ein Bauteil sein können.

Erfindungsgemäß wird die Folienbahn zumindest bereichsweise vorm, beim und/oder nach dem Tiefziehen gekühlt. Insbesondere der Bereich der tiefgezogen worden ist, wird beim und/oder nach dem Tiefziehen so lange gekühlt, bis keine ungewollte Rückverformung des tiefgezogenen Bereichs mehr erfolgt. In der Regel ist dies bei Temperaturen unterhalb der Plastifizierungstemperatur der jeweiligen Folie gegeben.

Beim Siegeln wird vorzugsweise das der erfindungsgemäßen Schrumpffolie zugewandte Siegelwerkzeug gekühlt. Diese Ausführungsform des erfindungsgemäßen Verfahrens hat den Vorteil, dass das der Schrumpffolie zugewandte Werkzeug ein Schrumpfen der Schrumpffolie nicht ungewollt aktiviert. Beim Einsatz von zwei schrumpffähigen Folien als Deckelfolie und in Form der Verpackungsmulde werden vorzugsweise beide Werkzeuge gekühlt.

Vorzugsweise wird zumindest die schrumpffähige erfindungsgemäße Folienbahn vorm und/oder beim Siegeln fixiert. Vorzugsweise erfolgt das Fixieren mit den Siegelwerkzeugen. Weiterhin bevorzugt erfolgt das Fixieren der schrumpffähigen Folienbahn mit den Ketten, mit denen die Folienbahn entlang der Verpackungsmaschine transportiert wird.

Im Detail wird die Erfindung anhand der Figuren 1 bis 9 erläutert. Dieses Erläuterungen sind lediglich beispielhaft und schränken den allgemeinen Erfindungsgedanken nicht ein. Die Erläuterungen gelten für die erfindungsgemäße Verpackungsmulde, die erfindungsgemäße Verpackung, das erfindungsgemäße Verfahren sowie die erfindungsgemäßen Vorrichtungen wie Tiefziehvorrichtung, Siegelstation und Verpackungsmaschine.

Figur 7 zeigt eine Siegelvorrichtung, die vorzugsweise für die Verpackungsmaschine gemäß Figur 8 bzw. gemäß Figur 9 verwendet wird.

Figur 7 zeigt die Siegelvorrichtung 13, die aus einem Oberwerkzeug 6 und einem Unterwerkzeug 3' besteht. Die Siegelvorrichtung ist Teil einer Verpackungsmaschine. Zwischen dem Ober- und dem Unterwerkzeug sind die Oberfolie 14 (nicht dargestellt Deckelfolie) sowie die schrumpffähige Folienbahn 1 (nicht dargestellt), in die Verpackungsmulden 8 durch Tiefziehen eingearbeitet worden sind, angeordnet. Die Oberfolie 14 (= Deckelfolie) ist in dem vorliegenden Fall ebenfalls schrumpffähig. Die Folienbahn 1 wird durch zwei Ketten (nicht dargestellt) in einer Verpackungsmaschine (nicht dargestellt) fixiert und transportiert. Die Oberfolie 14 wird an die Folienbahn 1 gesiegelt, um die Verpackungsmulden 8 zu verschließen. Die Oberfolie 14 ist nicht durch Ketten oder dergleichen fixiert und wird bekanntermaßen durch ihre Verbindung mit der Unterfolie 1 transportiert. Wie durch den Doppelpfeil dargestellt, ist das Oberwerkzeug vertikal verschiebbar. An dem Oberwerkzeug ist der beheizte Siegelrahmen 4 angeordnet, der beim Siegeln gegen die Siegelbrille 5 gedrückt wird. Dadurch werden die Folienbahnen 1, 14 gegeneinander gepresst. Durch den dabei entstehenden Druck und die erhöhte Temperatur erfolgt die Siegelung der Oberfolie an den Rand der Verpackungsmulden 8. Im Bereich jeder Verpackungsmulde ist am Oberwerkzeug eine Kühlplatte 2 angeordnet, die ein Aufwärmen der Oberfolie außerhalb der Siegelung verhindert. Diese Ausführungsform ist insbesondere bei schrumpffähigen Oberfolien von Interesse. Die Kühlplatten 2 sind ebenfalls vertikal verschiebbar. Das Unterwerkzeug ist auch, wie durch den Doppelpfeil angedeutet vertikal veschiebbar. Auch das Unterwerkzeug ist in dem vorliegenden Fall gekühlt, um ein ungewolltes Schrumpfen der Verpackungsmulde beim Siegeln zu verhindern. Für den Fall, dass die Oberfolie nicht schrumpffähig ist, kann in der Regel auf die Kühlplatte 2 und eine Kühlung des Oberwerkzeugs 6 verzichtet werden.

Figur 8 zeigt eine Verpackungsmaschinen zur Herstellung einer shrinkplate, d.h. einer Verpackung mit einer schrumpffähigen Verpackungsmulde, die mit einer nicht schrumpffähigen, vergleichsweise starren Deckelfolie verschlossen ist. Von einer Rolle 11 wird taktweise eine Folienbahn abgerollt und in der Tiefziehvorrichtung 12 werden Verpackungsmulden 8 in die Folienbahn eingeformt. Diese Verpackungsmulden 8 werden dann mit einem nicht dargestellten Verpackungsgut gefüllt und danach in der Siegelstation 13 mit einer Deckelfolie 14 verschlossen. In dem vorliegenden Fall besteht die Folienbahn 11 aus einer schrumpffähigen Folie während die Folienbahn 14 nicht schrumpffähig und relativ starr ist, so dass sie wie eine Tablett wirkt. Nach dem Siegeln wird die Verpackungsmulde in einer Schrumpfvorrichtung 15 geschrumpft, wobei nur die tiefgezogene Verpackungsmulde mit einem heißen Medium, beispielsweise heiße Luft, Dampf oder Wasser in Berührung kommt. Die so fertiggestellten geschrumpften Verpackungen werden so dann mit der Scheidvorrichtung 16 vereinzelt und als fertiggestellte Verpackung 17 abtransportiert. Die jeweiligen Doppelpfeile zeigen, dass ein oder zwei Aggregate der jeweiligen Station anhebbar bzw. absenkbar sind.

Figur 9 zeigt eine Verpackungsmaschine zur Herstellung einer shrinkpack in zwei Ansichten. Ein shrinkpack besteht aus einer schrumpffähigen Ober- und einer schrumpffähigen Unterfolie. Wiederum wird von einer Rolle 11 die schrumpffähigen Folienbahn abgerollt und in einer Formstation 12 die Verpackungsmulden 8 in die Folienbahn durch Tiefziehen eingeformt. Nachdem die Verpackungsmulden mit einem nicht dargestellten Verpackungsgut befüllt worden sind, wird die Verpackungsmulde mit einer Folienbahn 14 in der Siegelstation 13 durch Siegeln verschlossen. In dem vorliegenden Fall handelt es sich bei der Deckelfolie ebenfalls um eine schrumpffähige Folie. In einem nächsten Verfahrensschritt werden die Verpackungen in einer Schneidstation 16 vereinzelt. Die so hergestellten Verpackungen 18 werden in einen Schrumpftunnel geschrumpft, in dem sie von allen Seiten mit kochendem Wasser beaufschlagt werden. Die jeweiligen Doppelpfeile zeigen, dass ein oder zwei Aggregate der jeweiligen Station anhebbar bzw. absenkbar sind.

Ein weiterer Aspekt der Erfindung betrifft daher auch eine erfindungsgemäße Verpackungsmaschine zur Verarbeitung einer thermoformbaren, wärmeschrumpffähigen, vorzugsweise der erfindungsgemäßen, Mehrschichtfolie umfassend

(a) eine vorstehend beschriebene Vorrichtung zur Herstellung von tiefgezogenen Verpackungsmulden aus einer vorzugsweise erfindungsgemäßen, wärmeschrumpffähigen Folienbahn mit einem erfindungsgemäßen Tiefziehwerkzeug, wobei das Tiefziehwerkzeug beim Tiefziehen gekühlt ist; und

(b) eine vorstehend beschriebene Siegelvorrichtung mit einem Unterwerkzeug und Oberwerkzeug, wobei das Unterwerkzeug und/oder Oberwerkzeug beim Siegeln gekühlt ist.

Die vorstehend separat im Zusammenhang mit der Vorrichtung zur Herstellung von tiefgezogenen Kunststoffverpackungsmulden bzw. mit der Siegelvorrichtung beschriebenen, bevorzugten Ausführungsformen beziehen sich auch auf die erfindungsgemäße Verpackungsmaschine.

Ein weiterer Aspekt der Erfindung betrifft ein Verfahren zur Herstellung einer Verpackung aus einer thermoformbaren, wärmeschrumpffähigen, insbesondere der erfindungsgemäßen, Mehrschichtfolie, umfassend die Schritte

(i) Herstellen einer tiefgezogenen, wärmeschrumpffähigen Verpackungsmulde wie vorstehend beschrieben durch Tiefziehen einer Folienbahn aus einer thermoformbaren, wärmeschrumpffähigen, vorzugsweise der erfindungsgemäßen, Mehrschichtfolie, wobei die vorstehend beschriebenen Parameter eingehalten werden und

(ii) Herstellen einer versiegelten, wärmeschrumpffähigen Verpackung wie vorstehend beschrieben durch Siegeln einer wärmeschrumpffähigen Deckelfolie oder einer nicht wärmeschrumpffähigen Deckelfolie auf die in Schritt (i) erhaltene tiefgezogene, wärmeschrumpffähige Verpackungsmulde, wobei vorstehend beschriebenen Parameter eingehalten werden.

Die vorstehend separat im Zusammenhang mit der Vorrichtung zur Herstellung von tiefgezogenen Verpackungsmulden bzw. mit der Siegelvorrichtung und/oder Verpackungsmaschine beschriebenen, bevorzugten Verfahrensvarianten beziehen sich auch auf dieses erfindungsgemäße Verfahren zur Herstellung einer Verpackung.

Mit Hilfe der vorstehend beschriebenen Verpackungsmaschine bzw. durch das vorstehend beschriebene Verfahren wird eine versiegelte, wärmeschrumpffähige Verpackung erhalten bzw. ist eine versiegelte, wärmeschrumpffähige Verpackung erhältlich, welche als ein Verpackungselement die erfindungsgemäße thermogeformte Verpackungsmulde und als ein anderes Verpackungselement eine ggf. wärmeschrumpffähige Deckelfolie umfasst, wobei die beiden Verpackungselemente randseitig miteinander versiegelt sind. Da weder durch die Thermoformung noch durch die Heißsiegelung der Schrumpfprozess eingeleitet wird, sind die Wärmeschrumpfeigenschaften der Verpackungsmulde und ggf. der Deckelfolie auch nach dem Heißsiegeln im wesentlichen nicht beeinflusst. Bevorzugt beträgt sowohl die ggf. vorhandene Wärmeschrumpffähigkeit der Verpackungsmulde im thermogeformten Bereich als auch die Wärmeschrumpffähigkeit der Deckelfolie jeweils in Längs- und in Querrichtung wenigstens 20%, bevorzugt wenigstens 25%, bevorzugter wenigstens 30%, noch bevorzugter wenigstens 35%, am bevorzugtesten wenigstens 40% und insbesondere wenigstens 45%.

Die so erhaltene erfindungsgemäße versiegelte, wärmeschrumpffähige Verpackung wird wie vorstehend dargelegt abschließend geschrumpft, so dass sich sowohl die thermogeformte Verpackungsmulde und ggf. die Deckelfolie zusammenziehen und eng an das Verpackungsgut anlegen. Der Schrumpfprozess wird durch Wärmezufuhr eingeleitet, beispielsweise in einer Thermokammer.

Die Erfindung betrifft auch eine geschrumpfte Verpackung, welche durch die vorstehend beschriebene Schrumpfung der versiegelten, wärmeschrumpffähigen Verpackung erhältlich ist.

Die durch den Schrumpfprozess verdrängte Atmosphäre kann beispielsweise durch eine kleine Öffnung in der Verpackung entweichen, wobei die Öffnung abschließend verschlossen wird. Alternativ kann die Verpackung während oder nach der Versiegelung evakuiert werden.

Ein weiterer Aspekt der Erfindung betrifft ein Verpackungssystem umfassend die erfindungsgemäße Mehrschichtfolie und die erfindungsgemäße Verpackungsmaschine.

*Methode zur Prüfung der Schrumpffähigkeit*

Zur Messung der Schrumpffähigkeit einer erfindungsgemäßen Folie wird auf dem zu prüfenden Folienmuster ein Fadenkreuz 10 x 10 cm mit einem Folienstift aufgezeichnet, wobei ein Balken in die Maschinenrichtung (md), d. h. Extrusionsrichtung und der zweite Balken des Fadenkreuzes quer zur Maschinenrichtung (cma) gezeichnet wird. Das Wasserbad, in welches das Folienmuster für 6 sec eingetaucht wird, hat eine Temperatur von 93 °C.

Nach 6 sec wird das Muster entnommen und durch Ausmessen der Verkürzung des Fadenkreuzes für die jeweilige Richtung in % angegeben.

Bezugszeichen:

| | |
|---|---|
| 1 | Folienbahn |
| 2 | Kühlmittel |
| 3 | Tiefziehwerkzeug, Unterwerkzeug |
| 4 | Haltemittel, Klemmrahmen |
| 5 | Kühlmittel |
| 6 | Boden der Verpackungsmulde, Doppelpfeil |
| 7 | Heizmittel, Heizplatten, Heizelement, Heizpatrone |
| 8 | Verpackungsmulde |
| 9 | Packungsränder |

(fortgesetzt)

| 10 | Packungsboden |
|----|----|
| 11 | Folienrolle |
| 12 | Tiefziehstation |
| 13 | Siegelstation |
| 14 | Oberfolie |
| 15 | Schrumpfstation, Schrumpftunnel |
| 16 | Schneidstation |
| 17 | Fertiggestellte, geschrumpfte Verpackung |
| 18 | Verpackung vor dem Schrumpfen |
| 19 | Oberwerkzeug |

Bevorzugte Ausführungen 1 bis 28 (Ausf. 1 bis Ausf. 28) werden nachstehend aufgeführt:

Ausf. 1. Verpackungsmaschine zur Verarbeitung einer erfindungsgemäßen Mehrschichtfolie umfassend

(a) eine Vorrichtung zur Herstellung von tiefgezogenen Verpackungsmulden aus einer wärmeschrumpffähigen Folienbahn mit einem Tiefziehwerkzeug, wobei das Tiefziehwerkzeug Kühlmittel aufweist, und

(b) eine Siegelvorrichtung mit einem Unterwerkzeug und Oberwerkzeug, wobei das Unterwerkzeug und/oder Oberwerkzeug beim Siegeln gekühlt ist.

Ausf. 2. Verpackungsmaschine nach Ausf. 1, deren Tiefziehwerkzeug Kühlmittel aufweist.

Ausf. 3. Verpackungsmaschine nach Ausf. 1 oder 2, wobei die Folienbahn zwischen einem Haltemittel und dem Tiefziehwerkzeug einspannbar ist, wobei das Haltemittel vorzugsweise mit Kühlmitteln kühlbar und vor zugsweise vertikal verschiebbar angeordnet ist.

Ausf.4. Verpackungsmaschine nach einer der Ausf. 1 bis 3, deren Tiefziehwerkzeug ein Heizmittel, vorzugsweise eine Heizplatte, aufweist, mit der die Folienbahn aufheizbar ist, wobei die Heizplatte vorzugsweise als Tiefziehstempel ausgeführt ist.

Ausf. 5. Verpackungsmaschine nach einer der Ausf. 1 bis 4, deren Tiefziehwerkzeug ein Vakuum- und/oder Druckmittel zum Tiefziehen der Folienbahn aufweist, um vorzugsweise den Kontakt zwischen der Folienbahn und dem Heizmittel zu verbessern.

Ausf. 6. Verpackungsmaschine nach einer der Ausf. 1 bis 5, bei deren Siegelvorrichtung das Unterwerkzeug ein Kühlmittel aufweist.

Ausf. 7. Verpackungsmaschine nach einer der Ausf. 1 bis 6, bei deren Siegelvorrichtung das Unterwerkzeug vertikal verschiebbar ist.

Ausf. 8. Verpackungsmaschine nach einer der Ausf. 1 bis 7, deren Siegelvor richtung Siegelmittel, vorzugsweise Siegelbacken aufweist, die vorzugsweise beheizbar sind.

Ausf. 9. Verpackungsmaschine nach einer der Ausf. 1 bis 8, bei deren Siegelvorrichtung das Oberwerkzeug eine Kühlplatte, vorzugsweise pro herzustellender Verpackung, aufweist.

Ausf. 10. Verpackungsmaschine nach einer der voranstehenden Ausf., deren Oberwerkzeug (6) und/oder die Kühlplatten (2) vertikal verschiebbar angeordnet ist(sind).

Ausf. 11. Verpackungsmaschine nach einer der voranstehenden Ausf., deren Siegelvorrichtung eine Siegelbrille (5) aufweist, die vorzugsweise an dem Unterwerkzeug (3) angeordnet ist.

Ausf. 12. Verpackungsmaschine nach Ausf. 11, deren Siegelbrille (5) gekühlt ist.

Ausf. 13. Verpackungsmaschine nach Ausf. 11 oder 12, deren Siegelbrille (5) anheb- und absenkbar ist.

Ausf. 14. Verpackungsmaschine nach einer der Ausf. 11 bis 13, deren Siegelbrille (5) eine Gummigegenlage aufweist.

Ausf. 15. Verpackungssystem umfassend eine thermoformbere, wärmeschrumpffähige Mehrschichtfolie nach einem der Ansprüche 1 bis 19 und eine Verpackungsmaschine nach einer der Ausf. 1 bis 14.

Ausf. 16. Verfahren zur Herstellung einer Verpackung unter Verwendung einer wärmeschrumpffähigen Mehrschichtfolie, insbesondere einer nach einem der Ansprüche 1 bis 19, umfassend die Schritte

(i) Herstellen einer tiefgezogenen, wärmeschrumpffähigen Verpackungsmulde durch Tiefziehen einer Folienbahn der wärmeschrumpffähigen Mehrschichtfolie, wobei die Folienbahn erst teilweise aufgeheizt und vor und beim Tiefziehen teilweise gekühlt wird; und

(ii) Herstellen einer versiegelten, wärmeschrumpffähigen Verpackung durch Siegeln einer ggf. wärmeschrumpffähigen Deckelfolie auf die in Schritt (i) erhaltene tiefgezogene, wärmeschrumpffähige Verpackungsmulde, wobei die Deckelfolie und/oder die Verpackungsmulde gekühlt wird.

Ausf. 17. Verfahren nach Ausf. 16, wobei in Schritt (i) die Folienbahn vor dem Tiefziehen eingespannt wird.

Ausf. 18. Verfahren nach Ausf. 16 oder 17, wobei in Schritt (i) die Folienbahn erst teilsweise aufgeheizt und vor und beim Tiefziehen teilweise gekühlt wird.

Ausf. 19. Verfahren nach einer der Ausf. 16 bis 18, wobei in Schritt (i) ein Teilbereich der Foliebahn aufgewärmt und ein Teilbereich der Folienbahn gekühlt wird.

Ausf. 20. Verfahren nach einer der Ausf. 16 bis 19, wobei in Schritt (i) die Folienbahn durch Über- und/oder Unterdruck verformt wird.

Ausf. 21. Verfahren nach einer der voranstehenden Ausf., wobei die Verpackungsmulde einen Siegelbereich aufweist und dieser Siegelbereich beim Aufheizen und/oder beim Tiefziehen gekühlt wird.

Ausf. 22. Verfahren nach einer der voranstehenden Ausf., wobei jeder Verpackungsmulde ein Heizmittel zugeordnet wird.

Ausf. 23. Verfahren nach einer der voranstehenden Ausf., wobei die tiefgezogene Folie so lange gekühlt wird, bis eine Rückverformung unterbleibt.

Ausf. 24. Verfahren nach einer der Ausf. 16 bis 23, wobei in Schritt (ii) die schrumpffähige Deckelfolie von Siegelwerkzeugen bzw. Transportketten fixiert wird.

Ausf. 25. Verfahren zum Siegeln einer Oberfolie auf eine Verpackungsmulde, wobei die Verpackungsmulde und/oder die Oberfolie aus einer wärmeschrumpffähigen Folie hergestellt wird, wobei der Wärmeeintrag für die Siegelung von der der wärmeschrumpffähigen Folie abgewandten Seite der Verpackung erfolgt.

Ausf. 26. Verfahren nach einer der voranstehenden Ausf., wobei der Wärmeeintrag für die Siegelung von oben erfolgt.

Ausf. 27. Verfahren nach einer der voranstehenden Ausf., wobei das der schrumpffähigen Mehrschichtfolie zugewandte Siegelwerkzeug (6, 3) gekühlt wird.

Ausf. 28. Verfahren nach einer der Ausf. 16 bis 27, wobei es den Schritt umfasst

(iii) Schrumpfen der in Schritt (ii) erhaltenen versiegelten, wärmeschrumpffähigen Verpackung durch Wärmezufuhr.

**EP 1 855 947 B1**

**Patentansprüche**

1. Tiefziehfähige, wärmeschrumpffähige Mehrschichtfolie mit einer Wärmeschrumpffähigkeit in Längs- und in Querrichtung von jeweils wenigstens 20%, wobei die Wärmeschrumpffähigkeit durch das Tiefziehen im Wesentlichen nicht beeinflusst wird, umfassend folgende Schichten:

   ● eine Trägerschicht (T) basierend auf zumindest einem thermoplastischen Polymer;
   ● eine Haftvermittlerschicht (H$_1$) basierend auf zumindest einem Polymer mit einer Schmelzflussindex MFI im Bereich von 0,1 bis 2,0 g/10 min, bestimmt nach DIN ISO 1133 bei 190°C und 2,16 kg, deren Schichtdicke jeweils größer ist als die Schichtdicke beider unmittelbar an die Haftvermittlerschicht (H$_1$) angrenzenden Schichten;
   ● ggf. eine sauerstoffdichte Barriereschicht (B);
   ● ggf. eine Haftvermittlerschicht (H$_2$) basierend auf zumindest einem Polymer mit einer Schmelzflussindex MFI im Bereich von 0,1 bis 2,0 g/10 min, bestimmt nach DIN ISO 1133 bei 190°C und 2,16 kg, wobei ihre Schichtdicke größer ist als die Schichtdicke zumindest einer der unmittelbar an die Haftvermittlerschicht (H$_2$) angrenzenden Schichten; und
   ● eine Siegelschicht (S), welche eine der beiden Oberflächenschichten der Mehrschichtfolie bildet und auf zumindest einem thermoplastischen Polymer basiert.

2. Mehrschichtfolie nach Anspruch 1, **dadurch gekennzeichnet, dass** die Schichtdicke der ggf. vorhandenen Haftvermittlerschicht (H$_2$) jeweils größer ist als die Schichtdicke beider unmittelbar an die Haftvermittlerschicht (H$_2$) angrenzenden Schichten.

3. Mehrschichtfolie nach Anspruch 1 oder 2, **dadurch gekennzeichnet, dass** die Haftvermittlerschicht (H$_1$) und die ggf. vorhandene Haftvermittlerschicht (H$_2$), gleich oder verschieden, eine Schichtdicke von wenigstens 20 μm aufweist.

4. Mehrschichtfolie nach einem der Ansprüche 1 bis 3, **dadurch gekennzeichnet, dass** wenigstens eine Haftvermittlerschicht auf einem Ethylen-Vinylacetat-Copolymerisat basiert.

5. Mehrschichtfolie nach Anspruch 4, **dadurch gekennzeichnet, dass** das Ethylen-Vinylacetat-Copolymerisat, gleich oder verschieden, einen Vinylacetatgehalt im Bereich von 3 bis 18 mol.-% aufweist.

6. Mehrschichtfolie nach einem der Ansprüche 1 bis 5, **dadurch gekennzeichnet, dass** die Trägerschicht (T) auf zumindest einem Polyolefin, Olefin-Copolymerisat, Polyester oder deren Mischung basiert.

7. Mehrschichtfolie nach Anspruch 6, **dadurch gekennzeichnet, dass** die Träger schicht (T) auf zumindest einem Polymer basiert ausgewählt aus der Gruppe bestehend aus Polyethylen, Ethylen-Copolymerisat, Polypropylen und Propylen-Copolymerisat.

8. Mehrschichtfolie nach einem der Ansprüche 1 bis 7, **dadurch gekennzeichnet, dass** die Trägerschicht (T) eine Schichtdicke im Bereich von 5 bis 100 μm aufweist.

9. Mehrschichtfolie nach einem der Ansprüche 1 bis 8, **dadurch gekennzeichnet, dass** die Siegelschicht (S) auf zumindest einem Polymer basiert ausgewählt aus der Gruppe bestehend aus Polyolefinen, Olefin-Copolymerisaten, Polyalkylmethacrylaten, Alkylmethacrylat-Copolymerisaten, Ionomeren, oder deren Mischung.

10. Mehrschichtfolie nach einem der Ansprüche 1 bis 9, **dadurch gekennzeichnet, dass** die Siegelschicht (S) eine Schichtdicke im Bereich von 5 bis 25 μm aufweist.

11. Mehrschichtfolie nach einem der Ansprüche 1 bis 10, **dadurch gekennzeichnet, dass** sie eine Barriereschicht (B) umfasst, welche auf Polyvinylidenchlorid, einem Vinylidenchlorid-Copolymerisat, deren Mischung, oder einem Ethylen/Vinylalkohol-Copolymerisat basiert.

12. Mehrschichtfolie nach einem der Ansprüche 1 bis 11, **dadurch gekennzeichnet, dass** sie eine Barriereschicht (B) umfasst, welche eine Schichtdicke im Bereich von 5 bis 50 μm aufweist.

13. Mehrschichtfolie nach einem der Ansprüche 1 bis 12, **dadurch gekennzeichnet, dass** die Trägerschicht (T) die andere der beiden Oberflächenschichten bildet.

14. Mehrschichtfolie nach einem der vorstehenden Ansprüche, **dadurch gekennzeichnet, dass** sie ein Reckverhältnis von 1:5 bis 1:3 in Längsrichtung und von 1:5 bis 1:3 in Querrichtung aufweist.

15. Mehrschichtfolie nach einem der vorstehenden Ansprüche, **dadurch gekennzeichnet, dass** die unmittelbar aneinander angrenzenden Schichten untereinander quervernetzt sind.

16. Mehrschichtfolie nach einem der vorstehenden Ansprüchen, **dadurch gekennzeichnet, dass** sie eine Gesamtschichtdicke im Bereich von 50 bis 250 $\mu$m aufweist.

17. Verwendung einer tiefziehbaren, wärmeschrumpffähigen Mehrschichtfolie nach einem der Ansprüche 1 bis 16 zur Herstellung einer tiefgezogenen, wärmeschrumpffähigen Verpackungsmulde.

18. Verfahren zur Herstellung einer tiefgezogenen, wärmeschrumpffähigen Verpackungsmulde umfassend das Tiefziehen einer tiefziehbaren, wärmeschrumpffähigen Mehrschichtfolie nach einem der Ansprüche 1 bis 16 unter Bedingungen, bei denen die Wärmeschrumpffähigkeit im tiefgezogenen Bereich im Wesentlichen nicht beeinflusst wird.

19. Tiefgezogene, wärmeschrumpffähige Verpackungsmulde umfassend eine wärmeschrumpffähige Mehrschichtfolie nach einem der Ansprüche 1 bis 16, wobei die Wärmeschrumpffähigkeit im tiefgezogenen Bereich in Längs- und in Querrichtung jeweils wenigstens 20% beträgt.

20. Verwendung einer tiefgezogenen, wärmeschrumpffähigen Verpackungsmulde nach Anspruch 19 zur Herstellung einer Verpackung.

21. Verwendung nach Anspruch 20, **dadurch gekennzeichnet, dass** die Verpackung für ein Lebensmittel ist.

22. Verfahren zur Herstellung einer Verpackung umfassend

   - das Verfahren nach Anspruch 18 und
   - die Heißsiegelung der so erhaltenen tiefgezogenen, wärmeschrumpffähigen Verpackungsmulde mit einer wärmeschrumpffähigen Deckelfolie unter Bedingungen, bei denen sowohl die Wärmeschrumpffähigkeit der Verpackungsmulde im tiefgezogenen Bereich als auch die Wärmeschrumpffähigkeit der Deckelfolie im Wesentlichen nicht beeinflusst wird.

23. Verfahren zur Herstellung einer Verpackung umfassend

   - das Verfahren nach Anspruch 18 und
   - das Heißsiegeln der so erhaltenen tiefgezogenen, wärmeschrumpffähigen Verpackungsmulde mit einer nicht schrumpffähigen Deckelfolie unter Bedingungen, bei denen die wärmeschrumpffähigkeit der Verpackungsmulde im Wesentlichen nicht ausgelöst wird.

24. Verfahren nach Anspruch 23, **dadurch gekennzeichnet, dass** die Biegefestigkeit der Deckelfolie den Schrumpfkräften der wärmeschrumpffähigen Verpackungsmulde entspricht.

25. Verpackung umfassend eine tiefgezogene, wärmeschrumpffähige Verpackungsmulde nach Anspruch 19 und einer ggf. wärmeschrumpffähige Deckelfolie, wobei die Wärmeschrumpffähigkeit der Verpackungsmulde im tiefgezogenen Bereich und die ggf. vorhandene Wärmeschrumpffähigkeit der Deckelfolie jeweils in Längs- und in Querrichtung wenigstens 20% beträgt.

26. Verfahren zur Wärmeschrumpfung einer Verpackung nach Anspruch 25 umfassend das Zuführen von Wärme.

27. Verpackungssystem umfassend eine tiefziehfähige, wärmeschrumpffähige Mehrschichtfolie nach einem der Ansprüche 1 bis 16.

**Claims**

1. Deep-drawable, heat-shrinkable multilayer film with longitudinal and transverse heat-shrinkability of in each case at least 20%, where the deep-drawing essentially has no effect on the heat-shrinkability, comprising the following layers:

   ● a backing layer (T) based on at least one thermoplastic polymer;
   ● an adhesion-promoter layer ($H_1$) based on at least one polymer with a melt flow index MFI in the range from 0.1 to 2.0 g/10 min, determined in accordance with DIN ISO 1133 at 190°C and 2.16 kg, the thickness of which is in each case greater than the thickness of both layers immediately adjacent to the adhesion-promoter layer ($H_1$);
   ● optionally a barrier layer (B) impermeable to oxygen;
   ● optionally an adhesion-promoter layer ($H_2$) based on at least one polymer with a melt flow index MFI in the range from 0.1 to 2.0 g/10 min, determined in accordance with DIN ISO 1133 at 190°C and 2.16 kg, where the thickness of this layer is greater than the thickness of at least one of the layers immediately adjacent to the adhesion-promoter layer ($H_2$); and
   ● a sealable layer (S), which forms one of the two surface layers of the multilayer film, and is based on at least one thermoplastic polymer.

2. Multilayer film according to Claim 1, **characterized in that** the thickness of the optionally present adhesion-promoter layer ($H_2$) is in each case greater than the thickness of both layers immediately adjacent to the adhesion-promoter layer ($H_2$).

3. Multilayer film according to Claim 1 or 2, **characterized in that** the thickness of the adhesion-promoter layer ($H_1$) and of the optionally present adhesion-promoter layer ($H_2$) is identical or different, being at least 20 $\mu$m.

4. Multilayer film according to any of Claims 1 to 3, **characterized in that** at least one adhesion-promoter layer is based on an ethylene-vinyl acetate copolymer.

5. Multilayer film according to Claim 4, **characterized in that** the vinyl acetate content of the ethylene-vinyl acetate copolymer is identical or different, being in the range from 3 to 18 mol%.

6. Multilayer film according to any of Claims 1 to 5, **characterized in that** the backing layer (T) is based on at least one polyolefin, olefin copolymer, or polyester or on a mixture of these.

7. Multilayer film according to Claim 6, **characterized in that** the backing layer (T) is based on at least one polymer selected from the group consisting of polyethylene, ethylene copolymer, polypropylene and propylene copolymer.

8. Multilayer film according to any of Claims 1 to 7, **characterized in that** the thickness of the backing layer (T) is in the range from 5 to 100 $\mu$m.

9. Multilayer film according to any of Claims 1 to 8, **characterized in that** the sealable layer (S) is based on at least one polymer selected from the group consisting of polyolefins, olefin copolymers, polyalkyl methacrylates, alkyl methacrylate copolymers, and ionomers, or on a mixture of these.

10. Multilayer film according to any of Claims 1 to 9, **characterized in that** the thickness of the sealable layer (S) is in the range from 5 to 25 $\mu$m.

11. Multilayer film according to any of Claims 1 to 10, **characterized in that** it comprises a barrier layer (B) which is based on polyvinylidene chloride, on a vinylidene chloride copolymer, on a mixture of these, or on an ethylene/vinyl alcohol copolymer.

12. Multilayer film according to any of Claims 1 to 11, **characterized in that** it comprises a barrier layer (B), the thickness of which is in the range from 5 to 50 $\mu$m.

13. Multilayer film according to any of Claims 1 to 12, **characterized in that** the backing layer (T) forms the other of the two surface layers.

**14.** Multilayer film according to any of the preceding claims, **characterized in that** its longitudinal stretching ratio is from 1:5 to 1:3 and its transverse stretching ratio is from 1:5 to 1:3.

**15.** Multilayer film according to any of the preceding claims, **characterized in that** the layers immediately adjacent to one another have been crosslinked to one another.

**16.** Multilayer film according to any of the preceding claims, **characterized in that** its total thickness is in the range from 50 to 250 μm.

**17.** Use of a deep-drawable, heat-shrinkable multilayer film according to any of Claims 1 to 16 for producing a deep-drawn, heat-shrinkable packaging tray.

**18.** Process for producing a deep-drawn, heat-shrinkable packaging tray comprising the deep-drawing of a deep-drawable, heat-shrinkable multilayer film according to any of Claims 1 to 16 under conditions where the heat-shrinkability in the deep-drawn region is essentially not affected.

**19.** Deep-drawn, heat-shrinkable packaging tray comprising a heat-shrinkable multilayer film according to any of Claims 1 to 16, where the longitudinal and transverse heat-shrinkability in the deep-drawn region is in each case at least 20%.

**20.** Use of a deep-drawn, heat-shrinkable packaging tray according to Claim 19 for producing packaging.

**21.** Use according to Claim 20, **characterized in that** the packaging is for food or drink.

**22.** Process for producing packaging comprising

- the process according to Claim 18 and
- the heat-sealing of the resultant deep-drawn, heat-shrinkable packaging tray with a heat-shrinkable lid film under conditions where the heat-shrinkability of the packaging tray in the deep-drawn region and also the heat-shrinkability of the lid film are in essence not affected.

**23.** Process for producing packaging comprising

- the process according to Claim 18 and
- the heat-sealing of the resultant deep-drawn, heat-shrinkable packaging tray with a non-shrinkable lid film under conditions where the heat-shrinkability of the packaging tray is in essence not triggered.

**24.** Process according to Claim 23, **characterized in that** the flexural strength of the lid film corresponds to the shrinkage forces of the heat-shrinkable packaging tray.

**25.** Packaging comprising a deep-drawn, heat-shrinkable packaging tray according to Claim 19 and an optionally heat-shrinkable lid film, where the heat-shrinkability of the packaging tray in the deep-drawn region and the optional heat-shrinkability of the lid film present is in each case longitudinally and transversely at least 20%.

**26.** Process for the heat-shrinkage of packaging according to Claim 25 comprising the introduction of heat.

**27.** Packaging system comprising a deep-drawable, heat-shrinkable multilayer film according to any of Claims 1 to 16.

**Revendications**

**1.** Film multicouche emboutissable et apte à se rétracter à la chaleur, dont la capacité de retrait à la chaleur dans la direction longitudinale et la direction transversale est chaque fois d'au moins 20 %, l'emboutissage n'ayant essentiellement aucun effet sur la capacité de retrait à la chaleur, le film comportant les couches suivantes :

- une couche de support (T) à base d'au moins un polymère thermoplastique,
- une couche d'adhérence ($H_1$) à base d'au moins un polymère dont l'indice d'écoulement à l'état fondu MFI déterminé selon la norme DIN ISO 1133 à 190°C et 2,16 kg est compris dans la plage de 0,1 à 2,0 g/10 min et dont l'épaisseur est supérieure à l'épaisseur des deux couches directement adjacentes à la couche d'adhérence

($H_1$),

- éventuellement une couche de barrière (B) étanche vis-à-vis de l'oxygène,

- éventuellement une couche d'adhérence ($H_2$) à base d'au moins un polymère dont l'indice d'écoulement à l'état fondu MFI déterminé selon la norme DIN ISO 1133 à 190°C et 2,16 kg est compris dans la plage de 0,1 à 2,0 g/10 min et dont l'épaisseur est supérieure à l'épaisseur des deux couches directement adjacentes à la couche d'adhérence ($H_2$) et

- une couche de scellement (S) qui forme l'une des deux couches de surface du film multicouche et à base d'au moins un polymère thermoplastique.

2.  Film multicouche selon la revendication 1, **caractérisé en ce que** l'épaisseur de la couche d'adhérence ($H_2$) éventuellement présente est supérieure à l'épaisseur des deux couches directement adjacentes à la couche d'adhérence ($H_2$).

3.  Film multicouche selon les revendications 1 ou 2, **caractérisé en ce que** la couche d'adhérence ($H_1$) et la couche d'adhérence ($H_2$) éventuellement présente présentent des épaisseurs identiques ou différentes mais d'au moins 20 μm.

4.  Film multicouche selon les revendications 1 à 3, **caractérisé en ce qu'**au moins une couche d'adhérence est à base d'un copolymère d'éthylène et d'acétate de vinyle.

5.  Film multicouche selon la revendication 4, **caractérisé en ce que** les copolymères d'éthylène et d'acétate de vinyle identiques ou différents présentent une teneur en acétate de vinyle de l'ordre de 3 à 18 % en moles.

6.  Film multicouche selon les revendications 1 à 5, **caractérisé en ce que** la couche de support (T) est à base d'au moins une polyoléfine, un copolymère d'oléfine, un polyester ou leurs mélanges.

7.  Film multicouche selon la revendication 6, **caractérisé en ce que** la couche de support (T) à base d'au moins un polymère est sélectionnée dans l'ensemble constitué du polyéthylène, des copolymères d'éthylène, du polypropylène et des copolymères de propylène.

8.  Film multicouche selon les revendications 1 à 7, **caractérisé en ce que** la couche de support (T) présente une épaisseur de l'ordre de 5 à 100 μm.

9.  Film multicouche selon les revendications 1 à 8, **caractérisé en ce que** la couche de scellement (S) à base d'au moins un polymère est sélectionnée dans l'ensemble constitué des polyoléfines, des copolymères d'oléfine, des poly(méthacrylate d'alkyle), des copolymères de méthacrylate d'alkyle, des ionomères et de leurs mélanges.

10. Film multicouche selon les revendications 1 à 9, **caractérisé en ce que** la couche de scellement (S) présente une épaisseur de l'ordre de 5 à 25 μm.

11. Film multicouche selon les revendications 1 à 10, **caractérisé en ce qu'**il comporte une couche de barrière (B) à base de poly(chlorure de vinylidène), d'un copolymère de chlorure de vinylidène de leurs mélanges et d'un copolymère d'éthylène et d'alcool vinylique.

12. Film multicouche selon les revendications 1 à 11, **caractérisé en ce qu'**il comporte une couche de barrière (B) dont l'épaisseur est comprise dans la plage de 5 à 50 μm.

13. Film multicouche selon les revendications 1 à 12, **caractérisé en ce que** la couche de support (T) forme l'autre des deux couches de surface.

14. Film multicouche selon l'une des revendications précédentes, **caractérisé en ce qu'**il présente un rapport d'emboutissage de 1:5 à 1:3 dans le sens de la longueur et de 1:5 à 1:3 dans la direction transversale.

15. Film multicouche selon l'une des revendications précédentes, **caractérisé en ce que** les couches directement adjacentes les unes aux autres sont réticulées entre elles.

16. Film multicouche selon l'une des revendications précédentes, **caractérisé en ce qu'**il présente une épaisseur totale de l'ordre de 50 à 250 μm.

**17.** Utilisation d'un film multicouche emboutissable et apte à se rétracter à la chaleur selon l'une des revendications 1 à 16 pour la fabrication de barquettes d'emballage embouties et aptes à se rétracter thermiquement.

**18.** Procédé de fabrication d'une barquette d'emballage emboutie et apte à se rétracter à la chaleur, le procédé comportant l'emboutissage d'un film multicouche emboutissable et apte à se rétracter à la chaleur selon l'une des revendications 1 à 16 dans des conditions dans lesquelles la capacité de retrait à la chaleur n'est essentiellement pas influencée dans la partie emboutie.

**19.** Barquette d'emballage emboutie et apte à se rétracter à la chaleur comportant un film multicouche emboutissable et apte à se rétracter à la chaleur selon l'une des revendications 1 à 16, dans laquelle la capacité de retrait à la chaleur dans la direction longitudinale et dans la direction transversale de la partie emboutie est chaque fois d'au moins 20 %.

**20.** Utilisation d'une barquette d'emballage emboutie et apte à se rétracter à la chaleur selon la revendication 19 pour la fabrication d'un emballage.

**21.** Utilisation selon la revendication 20, **caractérisée en ce que** l'emballage est prévu pour des produits alimentaires.

**22.** Procédé de fabrication d'un emballage, le procédé comportant :

le procédé selon la revendication 18 et
le scellage à la chaleur de la barquette d'emballage emboutie et apte à se rétracter à la chaleur ainsi obtenue, à l'aide d'un film de couverture apte à se rétracter à la chaleur dans des conditions dans lesquelles tant la capacité de retrait à la chaleur de la barquette d'emballage à l'état embouti que la capacité de retrait à la chaleur du film de couverture ne sont essentiellement pas influencées.

**23.** Procédé de fabrication d'un emballage, le procédé comportant :

le procédé selon la revendication 18 et
le scellage à la chaleur de la barquette d'emballage emboutie et apte à se rétracter à la chaleur ainsi obtenue, à l'aide d'un film de couverture apte à se rétracter à la chaleur, dans des conditions dans lesquelles la capacité du retrait à la chaleur de la barquette d'emballage n'est essentiellement pas perdue.

**24.** Procédé selon la revendication 23, **caractérisé en ce que** la résistance en flexion du film de couverture correspond aux forces de retrait de la barquette d'emballage apte à se rétracter à la chaleur.

**25.** Emballage comportant une barquette d'emballage emboutie et apte à se rétracter à la chaleur selon la revendication 19 et un film de couverture éventuellement apte à se rétracter à la chaleur, la capacité de retrait à la chaleur de la barquette d'emballage à l'état embouti et la capacité de retrait à la chaleur éventuel du film de couverture dans le sens de la longueur et dans la direction transversale sont chacune d'au moins 20 %.

**26.** Procédé de retrait à la chaleur d'un emballage selon la revendication 25, le procédé comportant l'apport de chaleur.

**27.** Système d'emballage comportant un film multicouche emboutissable et apte à se rétracter à la chaleur selon l'une des revendications 1 à 16.

FIG. 1

FIG. 2

EP 1 855 947 B1

FIG. 3

FIG. 4

Fig. 5

Fig. 6

Fig. 7

Fig. 8

Fig. 9

EP 1 855 947 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7096582 A

**In der Beschreibung aufgeführte Nicht-Patentliteratur**

- **A.L. BRODY ; K.S. MARSH.** The Wiley Encyclopedia of Packaging Technology. Wiley-Interscience, 1997
- **W. SOROKA.** Fumdamentals of Packaging Technology. Institute of Packaging Professionals, 1995
- **J. NENTWIG.** Kunststoff-Folien. Hanser Fachbuch, 2000
- Hanser Understanding Books. **S.E.M. SELKE.** Understanding Plastics Packaging Technology. Hanser Gardner Publications, 1997